# EUROPEAN PATENT SPECIFICATION

(11) **EP 4 338 318 B1**
(45) Date of publication and mention of the grant of the patent: **11.02.2026**
(21) Application number: 21941339.0
(22) Date of filing: 13.05.2021
(51) Int. Cl.: H04B 15/00, H04W 24/02, H04B 7/04, H04B 17/10, H04B 17/345, H04W 24/10

(54) **NETWORK INFORMATION EXCHANGE FOR CROSS-LINK INTERFERENCE MANAGEMENT WITH INTELLIGENT REFLECTING SURFACES**
NETZWERKINFORMATIONSAUSTAUSCH FÜR QUERVERBINDUNGSINTERFERENZVERWALTUNG MIT INTELLIGENTEN REFLEKTIERENDEN OBERFLÄCHEN
ÉCHANGE D'INFORMATIONS DE RÉSEAU POUR LA GESTION D'INTERFÉRENCE DE LIAISON CROISÉE AVEC DES SURFACES RÉFLÉCHISSANTES INTELLIGENTES

(43) Date of publication of application: 20.03.2024
(73) Proprietor: QUALCOMM Incorporated, San Diego, CA 92121-1714 (US)
(72) Inventor: XU, Huilin, San Diego, California 92121-1714 (US); REN, Yuwei, San Diego, California 92121-1714 (US); HE, Qunfeng, San Diego, California 92121-1714 (US)
(74) Representative: Tomkins & Co
(86) International application number: PCT/CN2021/093567
(87) International publication number: WO 2022/236767

(56) References cited:
- WO-A1-2020/145867
- WO-A1-2020/146851
- CN-A- 110 830 097
- CHEN HE ET AL: "Weighted Sum-Rate Maximization for Intelligent Reflecting Surface Assisted Multi-Cell MU-MIMO Communications", ARXIV.ORG, CORNELL UNIVERSITY LIBRARY, 201 OLIN LIBRARY CORNELL UNIVERSITY ITHACA, NY 14853, 29 September 2020 (2020-09-29), XP081773685
- ZHENG BEIXIONG ET AL: "Intelligent Reflecting Surface-Enhanced OFDM: Channel Estimation and Reflection Optimization", IEEE WIRELESS COMMUNICATIONS LETTERS, IEEE, PISCATAWAY, NJ, USA, vol. 9, no. 4, 20 December 2019 (2019-12-20), pages 518 - 522, XP011782311, ISSN: 2162-2337, [retrieved on 20200408], DOI: 10.1109/LWC.2019.2961357
- KIM HYEJIN; KIM JINTAE; HONG DAESIK: "Dynamic TDD Systems for 5G and Beyond: A Survey of Cross-Link Interference Mitigation", IEEE COMMUNICATIONS SURVEYS & TUTORIALS, IEEE, USA, vol. 22, no. 4, 13 July 2020 (2020-07-13), USA , pages 2315 - 2348, XP011821401, DOI: 10.1109/COMST.2020.3008765
- ZTE: "Discussion on network coordination mechanisms for CLI mitigation", 3GPP DRAFT; R1-1900222 DISCUSSION ON NETWORK COORDINATION MECHANISMS FOR CLI MITIGATION-FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Taipei; 20190121 - 20190125, 20 January 2019 (2019-01-20), Mobile Competence Centre ; 650, route des Lucioles ; F-06921 Sophia-Antipolis Cedex ; France , XP051593144

## Description

### BACKGROUND

### Technical Field

The described aspects relate generally to wireless communication systems, and more particularly, to apparatuses and methods for exchanging network information for managing cross-link interference (CLI) with intelligent reflecting surfaces (IRSs).

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G NR. 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology.

In particular, wireless communications of one wireless communication device may be negatively impacted by transmissions from a neighboring wireless communication device, such as cross-link interference. Improvements are presented herein. These improvements may also be applicable to other multi-access technologies and the telecommunication standards that employ these technologies.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

Methods, apparatuses, and computer-readable mediums for wireless communication are disclosed by the present disclosure.

An example aspect includes a method of managing cross-link interference (CLI) by a first network node of a wireless communication network, according to claim 1.

Another example aspect includes an apparatus of managing CLI by a first network node of a wireless communication network, according to claim 11.

Another example aspect includes a method of managing CLI by a second network node of a wireless communication network, according to claim 12.

Another example aspect includes an apparatus of managing CLI by a second network node of a wireless communication network, according to claim 13.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communication system and an access network, in accordance with various aspects of the present disclosure.
FIG. 2A is a diagram illustrating an example of a first frame, in accordance with various aspects of the present disclosure.
FIG. 2B is a diagram illustrating an example of downlink channels within a subframe, in accordance with various aspects of the present disclosure.
FIG. 2C is a diagram illustrating an example of a second frame, in accordance with various aspects of the present disclosure.
FIG. 2D is a diagram illustrating an example of uplink channels within a subframe, in accordance with various aspects of the present disclosure.
FIG. 3 is a diagram illustrating an example of hardware components of the base station and the UE in the access network, in accordance with various aspects of the present disclosure.
FIG. 4 is a diagram illustrating an example of cross-link interference (CLI) between two user equipment (UE) in certain resources over time, in accordance with various aspects of the present disclosure.
FIG. 5 is a diagram illustrating an example of an intelligent reflecting surface (IRS), in accordance with various aspects of the present disclosure.
FIG. 6 is a diagram illustrating an example of a wireless communication system with an IRS, in accordance with various aspects of the present disclosure.
FIG. 7 is a diagram illustrating an example of a multi-cell wireless communication system with an IRS, in accordance with various aspects of the present disclosure.
FIG. 8 is a diagram illustrating an example of a time-domain pattern of a set of different reflection coefficients configured for use by an IRS for CLI measurements, in accordance with various aspects of the present disclosure.
FIG. 9 is a diagram illustrating an example of a network information exchange for CLI management with an IRS, in accordance with various aspects of the present disclosure.
FIG. 10 is a diagram illustrating example apparatus, such as a first network node, for managing CLI, in accordance with various aspects of the present disclosure.
FIG. 11 is a flowchart of a method of managing CLI by a first network node of a wireless communication network, in accordance with various aspects of the present disclosure.
FIG. 12 is a flowchart of first additional or optional steps for the method of managing CLI by a first network node of a wireless communication network, in accordance with various aspects of the present disclosure.
FIG. 13 is a flowchart of second additional or optional steps for the method of managing CLI by a first network node of a wireless communication network, in accordance with various aspects of the present disclosure.
FIG. 14 is a flowchart of third additional or optional steps for the method of managing CLI by a first network node of a wireless communication network, in accordance with various aspects of the present disclosure.
FIG. 15 is a flowchart of fourth additional or optional steps for the method of managing CLI by a first network node of a wireless communication network, in accordance with various aspects of the present disclosure.
FIG. 16 is a diagram illustrating example apparatus, such as a second network node, for managing CLI, in accordance with various aspects of the present disclosure.
FIG. 17 is a flowchart of a method of managing CLI by a first second node of a wireless communication network, in accordance with various aspects of the present disclosure.
FIG. 18 is a flowchart of first additional or optional steps for the method of managing CLI by a second network node of a wireless communication network, in accordance with various aspects of the present disclosure.
FIG. 19 is a flowchart of second additional or optional steps for the method of managing CLI by a second network node of a wireless communication network, in accordance with various aspects of the present disclosure.
FIG. 20 is a flowchart of third additional or optional steps for the method of managing CLI by a second network node of a wireless communication network, in accordance with various aspects of the present disclosure.
FIG. 21 is a flowchart of fourth additional or optional steps for the method of managing CLI by a second network node of a wireless communication network, in accordance with various aspects of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

In some aspects, wireless transmissions of a first user equipment (UE) in a wireless communication system may interfere with the ability of a neighboring second UE to receive wireless transmissions from another device. That is, the second UE may receive a desired wireless transmission in combination with a different wireless transmission from the first UE. For example, the second UE may be configured to receive the desired wireless transmission during a same time period as the first UE may be configured to transmit the wireless transmission, leading to cross-link interference (CLI). Conventional wireless communication systems may perform one or more CLI management procedures to attempt to mitigate the effects of the CLI from the first UE on the second UE. However, in some aspects, CLI management procedures may not leverage the use of intelligent reflective surfaces (IRSs) to manage the CLI.

Aspects presented herein provide for multiple manners for exchanging network information between network nodes to manage CLI with IRSs. In some aspects, the network information exchanges may provide for a network node to configure an IRS to mitigate the effects of CLI on a UE. Further, aspects presented herein may reduce interference and increase resource efficiency, when compared to a conventional communication system.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media, which may be referred to as non-transitory computer-readable media. Non-transitory computer-readable media may exclude transitory signals. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

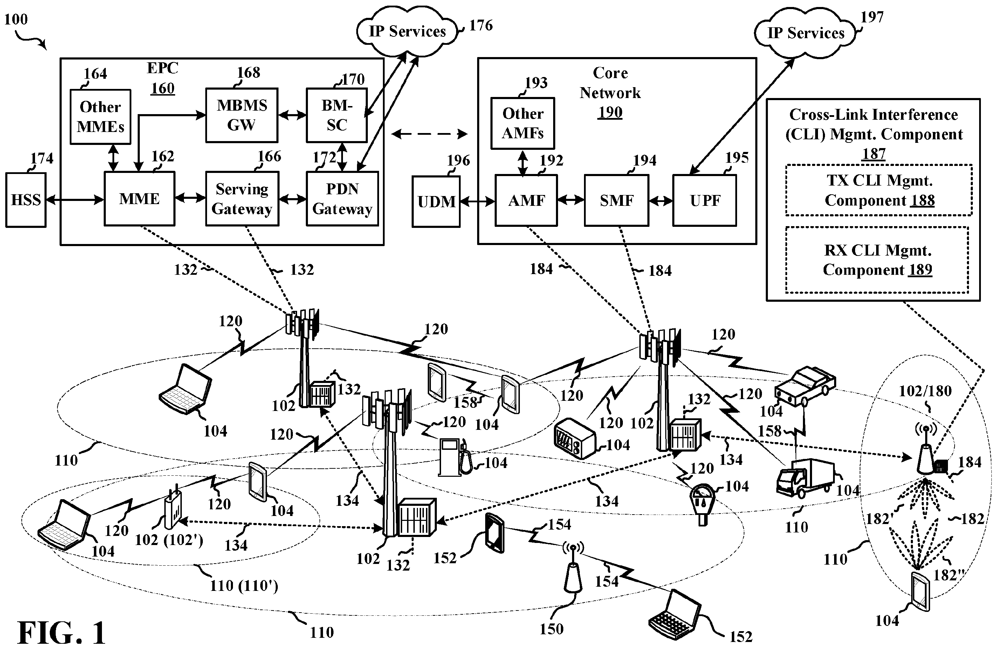

FIG. 1 is a diagram illustrating an example of a wireless communication system and an access network 100. The wireless communication system 100 (also referred to as a wireless wide area network (WWAN)) includes base stations (or network nodes) 102, UEs 104, an Evolved Packet Core (EPC) 160, and another core network 190 (e.g., a 5G Core (5GC)).

In some aspects, the base stations 102 may include a cross-link interference (CLI) management component 187 configured to manage CLI with intelligent reflecting surfaces (IRSs). The CLI management component 187 may include a set of components, such as a transmitting (TX) CLI management component 188 and a receiving (RX) CLI management component 189. For example, the TX CLI management component 188 may be configured to generate a reflection coefficient measurement configuration, transmit network information, receive CLI measurement information, identify a particular reflection coefficient, and configure the IRS to reduce or eliminate CLI caused by a first UE 104 served by the base station 102 having the TX CLI management component 188 to a second UE 104 served by another base station 102. In another aspect, the RX CLI management component 189 may be configured to receive network information, transmit CLI measurement configuration, receive CLI measurements, and transmit CLI measurement information to reduce or eliminate CLI caused by a second UE 104 served by another base station 102 to a first UE 104 served by the base station 102 having the RX CLI management component 189.

The base stations 102 may include macrocells (high power cellular base station) and/or small cells (low power cellular base station). The macrocells include base stations. The small cells include femtocells, picocells, and microcells. The base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., S1 interface), which may be wired or wireless. The base stations 102 configured for 5G NR (collectively referred to as Next Generation RAN (NG-RAN)) may interface with core network 190 through second backhaul links 184, which may be wired or wireless. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The third backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 and/or UEs 104 may use spectrum up to Y MHz (e.g., 5, 10, 15, 20, 100, 400, etc. MHz) bandwidth per carrier allocated in a carrier aggregation of up to a total of *Yx* MHz (*x* component carriers) used for transmission in each direction. The carriers may or may not be adjacent to each other. Allocation of carriers may be asymmetric with respect to downlink and uplink (e.g., more or fewer carriers may be allocated for downlink than for uplink). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the downlink/uplink WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communication system 100 may further include a Wi-Fi access point (AP) 150 in communication with Wi-Fi stations (STAs) 152 via communication links 154, e.g., in a 5 GHz unlicensed frequency spectrum or the like. When communicating in an unlicensed frequency spectrum, the STAs 152 and/or the AP 150 may perform a clear channel assessment (CCA) prior to communicating in order to determine whether the channel is available.

A base station 102, whether a small cell 102' or a large cell (e.g., macro base station), may include an evolved Node B (eNB), gNodeB (gNB), or other type of base station. Some base stations, such as gNB 180 may operate in one or more frequency bands within the electromagnetic spectrum.

The small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR two initial operating bands have been identified as frequency range designations FR1 (410 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" (mmW) band in documents and articles, despite being different from the extremely high frequency (EHF) band (30 GHz - 300 GHz) which is identified by the International Telecommunications Union (ITU) as a "millimeter wave" band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, or may be within the EHF band. Communications using the mmW radio frequency band have extremely high path loss and a short range. The mmW base station 180 may utilize beamforming 182 with the UE 104 to compensate for the path loss and short range.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 and/or the UE 104 may perform beam training to determine the best receive and transmit directions for each of the base station 180 and/or the UE 104. The transmit and receive directions for the base station 180 may or may not be the same. The transmit and receive directions for the UE 104 may or may not be the same. Although beamformed signals are illustrated between UE 104 and base station 102/180, aspects of beamforming may similarly may be applied by UE 104 to communicate with another UE 104, such as based on sidelink, V2X, V2V, or D2D communication.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet Protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a packet-switched (PS) Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a PS Streaming (PSS) Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Although the following description may provide examples for communication in connection with 5G NR, the concepts described herein may be applicable to other similar areas, such as LTE, LTE-A, CDMA, GSM, and other wireless technologies.

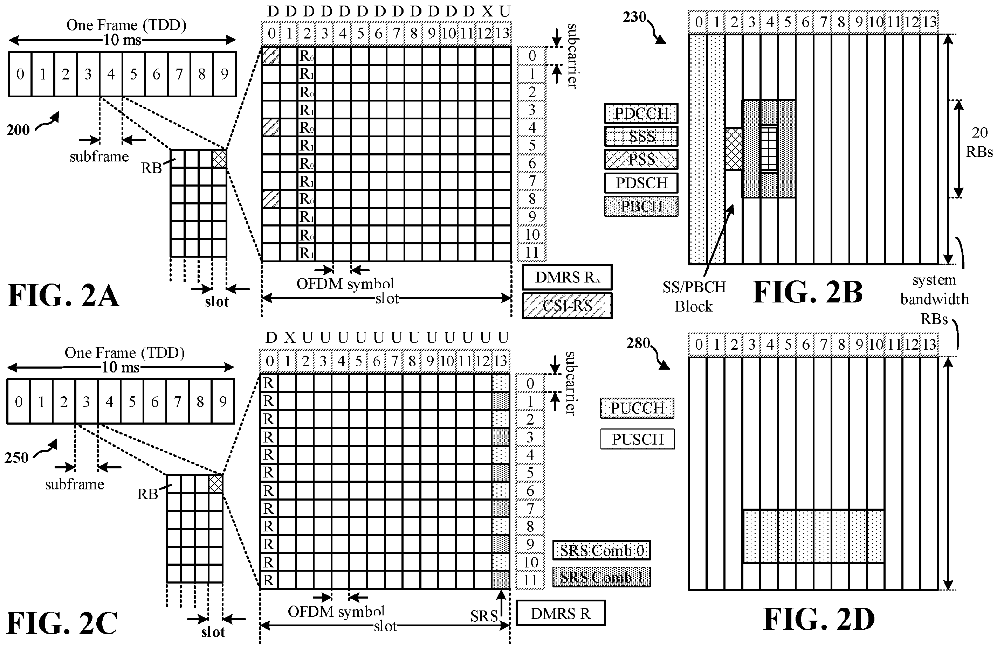

Referring to FIGS. 2A-2D, the diagrams illustrate examples of different resources that may be used for communications between network elements (e.g., base station 102, UE 104) of the wireless communication system and the access network 100 described above in FIG. 1. The resources may be time-based, frequency-based, or both on time and frequency.

FIG. 2A is a diagram 200 illustrating an example of a first subframe within a 5G NR frame structure. FIG. 2B is a diagram 230 illustrating an example of downlink channels within a 5G NR subframe. FIG. 2C is a diagram 250 illustrating an example of a second subframe within a 5G NR frame structure. FIG. 2D is a diagram 280 illustrating an example of uplink channels within a 5G NR subframe. The 5G NR frame structure may be frequency division duplexed (FDD) in which for a particular set of subcarriers (carrier system bandwidth), subframes within the set of subcarriers are dedicated for either downlink or uplink, or may be time division duplexed (TDD) in which for a particular set of subcarriers (carrier system bandwidth), subframes within the set of subcarriers are dedicated for both downlink and uplink. In the examples provided by FIGS. 2A, 2C, the 5G NR frame structure is assumed to be TDD, with subframe 4 being configured with slot format 28 (with mostly downlink), where D is downlink, U is uplink, and F is flexible for use between downlink/uplink, and subframe 3 being configured with slot format 1 (with mostly uplink). While subframes 3, 4 are shown with slot formats 1, 28, respectively, any particular subframe may be configured with any of the various available slot formats 0-61. Slot formats 0, 1 are all downlink, uplink, respectively. Other slot formats 2-61 include a mix of downlink, uplink, and flexible symbols. UEs are configured with the slot format (dynamically through downlink control information (DCI), or semi-statically/statically through radio resource control (RRC) signaling) through a received slot format indicator (SFI). Note that the description *infra* applies also to a 5G NR frame structure that is TDD.

Other wireless communication technologies may have a different frame structure and/or different channels. A frame (e.g., 10 milliseconds) may be divided into 10 equally sized subframes (e.g., 1 millisecond). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on downlink may be cyclic prefix (CP) OFDM (CP-OFDM) symbols. The symbols on uplink may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration 0, different numerologies µ 0 to 5 allow for 1, 2, 4, 8, 16, and 32 slots, respectively, per subframe. For slot configuration 1, different numerologies 0 to 2 allow for 2, 4, and 8 slots, respectively, per subframe. Accordingly, for slot configuration 0 and numerology µ, there are 14 symbols/slot and 2*^{µ}* slots/subframe. The subcarrier spacing and symbol length/duration are a function of the numerology. The subcarrier spacing may be equal to 2*^{µ}* * 15 kHz, where µ is the numerology 0 to 5. As such, the numerology µ=0 has a subcarrier spacing of 15 kHz and the numerology µ=5 has a subcarrier spacing of 480 kHz. The symbol length/duration is inversely related to the subcarrier spacing. FIGS. 2A-2D provide an example of slot configuration 0 with 14 symbols per slot and numerology µ=2 with 4 slots per subframe. In such an example, the slot duration may be 0.25 milliseconds, the subcarrier spacing may be 60 kHz, and the symbol duration may be approximately 16.67 microseconds (µs). Within a set of frames, there may be one or more different bandwidth parts (BWPs) (see FIG. 2B) that are frequency division multiplexed. Each BWP may have a particular numerology.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as R*ₓ* for one particular configuration, where 100x is the port number, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various downlink channels within a subframe of a frame. The physical downlink control channel (PDCCH) carries DCI within one or more control channel elements (CCEs) (e.g., 1, 2, 4, 8, 16, or 32 CCEs), each CCE including nine RE groups (REGs), each REG including four consecutive REs in an OFDM symbol of an RB. A PDCCH within one BWP may be referred to as a control resource set (CORESET). A UE is configured to monitor PDCCH candidates in a PDCCH search space (e.g., common search space, UE-specific search space) during PDCCH monitoring occasions on the CORESET, where the PDCCH candidates have different DCI formats and different aggregation levels. Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block (also referred to as SS block (SSB)). The terms SSB and SS/PBCH may be used interchangeably. The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the uplink.

FIG. 2D illustrates an example of various uplink channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) ACK/NACK feedback. The PUSCH carries data, and may additionally be used to carry a buffer status report (BSR), a power headroom report (PHR), and/or UCI.

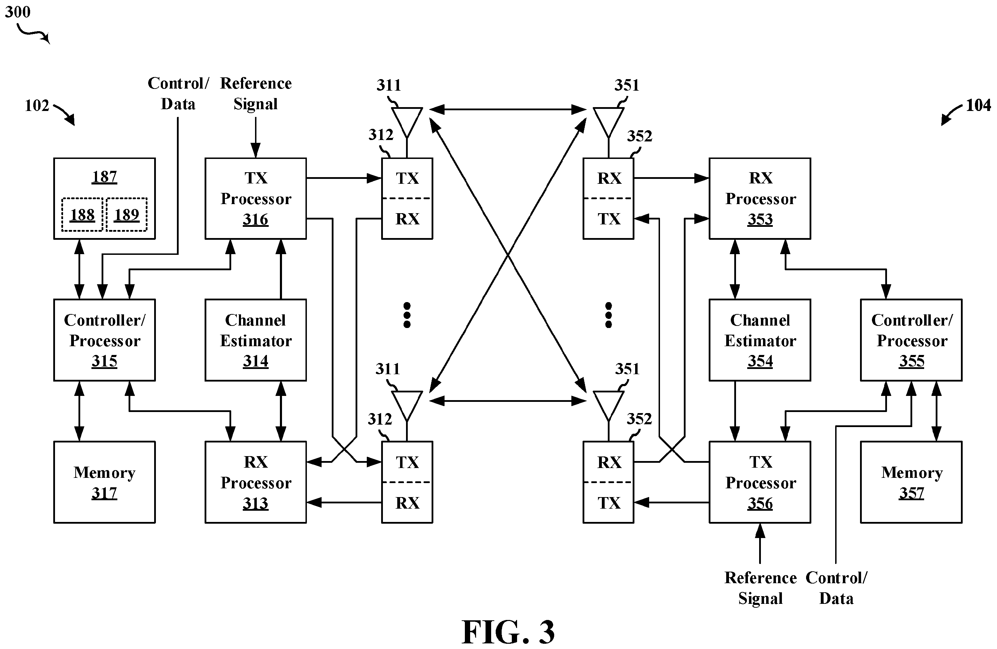

FIG. 3 is a block diagram 300 of example hardware components of a base station 102 in communication with a UE 104 in an access network. In the downlink, IP packets from the EPC 160 may be provided to a controller/processor 315. The controller/processor 315 may implement Layer 3 and/or Layer 2 functionality. Layer 3 may include a radio resource control (RRC) layer, and Layer 2 may include a service data adaptation protocol (SDAP) layer, a packet data convergence protocol (PDCP) layer, a radio link control (RLC) layer, and a medium access control (MAC) layer. The controller/processor 315 may provide RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression/decompression, security (ciphering, deciphering, integrity protection, integrity verification), and handover support functions; RLC layer functionality associated with the transfer of upper layer PDUs, error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 313 may implement Layer 1 functionality associated with various signal processing functions. Layer 1, which may include a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 may handle mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an inverse fast Fourier transform (IFFT) to produce a physical channel carrying a time-domain OFDM symbol stream. The OFDM stream may be spatially precoded to produce multiple spatial streams. Channel estimates from a channel estimator 314 may be used to determine the coding and modulation scheme, as well as for spatial processing. The channel estimate may be derived from a reference signal and/or channel condition feedback transmitted by the UE 104. Each spatial stream may then be provided to a different antenna 311 via a separate transmitter 312TX. Each transmitter 312TX may modulate an RF carrier with a respective spatial stream for transmission.

At the UE 104, each receiver 352RX may receive a signal through its respective antenna 351. Each receiver 352RX may recover information modulated onto an RF carrier and may provide the information to the receive (RX) processor 353. The TX processor 356 and the RX processor 353 may implement Layer 1 functionality associated with various signal processing functions. The RX processor 353 may perform spatial processing on the information to recover any spatial streams destined for the UE 104. If or when multiple spatial streams are destined for the UE 104, the multiple spatial streams may be combined by the RX processor 353 into a single OFDM symbol stream. The RX processor 353 may then convert the OFDM symbol stream from the time-domain to the frequency domain using a Fast Fourier Transform (FFT). The frequency domain signal may comprises a separate OFDM symbol stream for each subcarrier of the OFDM signal. The symbols on each subcarrier, and the reference signal, may be recovered and demodulated by determining the most likely signal constellation points transmitted by base station 102. These soft decisions may be based on channel estimates computed by the channel estimator 354. The soft decisions may then be decoded and deinterleaved to recover the data and control signals that were originally transmitted by the base station 102 on the physical channel. The data and control signals may then be provided to the controller/processor 355, which may implement Layer 3 and Layer 2 functionality.

The controller/processor 355 can be associated with a memory 357 that stores program codes and data. The memory 357 may be referred to as a non-transitory computer-readable medium. The controller/processor 355 may provide demultiplexing between transport and logical channels, packet reassembly, deciphering, header decompression, and control signal processing to recover IP packets from the EPC 160. The controller/processor 355 is also responsible for error detection using an acknowledge (ACK) and/or negative acknowledge (NACK) protocol to support HARQ operations.

Similar to the functionality described in connection with the transmission by base station 102, the controller/processor 355 may provide RRC layer functionality associated with system information (e.g., MIB, SIBs) acquisition, RRC connections, and measurement reporting; PDCP layer functionality associated with header compression/decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 354 from a reference signal or feedback transmitted by the base station 102 may be used by the TX processor 356 to select the appropriate coding and modulation schemes, and to facilitate spatial processing. The spatial streams generated by the TX processor 356 may be provided to different antenna 351 via separate transmitters 352TX. Each transmitter 352TX may modulate an RF carrier with a respective spatial stream for transmission.

The uplink transmission may be processed at the base station 102 in a manner similar to that described in connection with the receiver function at the UE 104. Each receiver 312RX may receive a signal through its respective antenna 311. Each receiver 312RX may recover information modulated onto an RF carrier and may provide the information to a RX processor 313.

The controller/processor 315 may be associated with, and coupled with, a memory 317 that stores program codes and data. The memory 317 may be referred to as a non-transitory computer-readable medium. The controller/processor 315 may provide demultiplexing between transport and logical channels, packet reassembly, deciphering, header decompression, control signal processing to recover IP packets from the UE 104. IP packets from the controller/processor 315 may be provided to the EPC 160. The controller/processor 315 may also be responsible for error detection using an ACK and/or NACK protocol to support HARQ operations.

In some aspects, the base station 102 may include a CLI management component 187 configured to manage CLI with IRSs. The CLI management component 187 may include a set of components, such as a TX CLI management component 188 and a RX CLI management component 189. For example, the TX CLI management component 188 may be configured to generate a reflection coefficient measurement configuration, transmit network information, receive CLI measurement information, identify a particular reflection coefficient, and configure the IRS. The RX CLI management component 189 may be configured to receive network information, transmit CLI measurement configuration, receive CLI measurements, and transmit CLI measurement information.

In these aspects, at least one of the TX processor 316, the RX processor 313, and the controller/processor 315 may be configured to perform aspects in connection with the CLI management component 187 of FIG. 1 (e.g., the TX CLI management component 188, the RX CLI management component 189). For example, the memory 317 may store computer-executable instructions defining the CLI management component 187. In other aspects, the TX processor 316, the RX processor 313, and/or the controller/processor 315 may be configured to execute the CLI management component 187.

Wireless communication systems may be configured to share available system resources and provide various telecommunication services (e.g., telephony, video, data, messaging, broadcasts, etc.) based on multiple-access technologies such as CDMA systems, TDMA systems, FDMA systems, OFDMA systems, SC-FDMA systems, TD-SCDMA systems, etc. that support communication with multiple users. In many cases, common protocols that facilitate communications with wireless devices are adopted in various telecommunication standards. For example, communication methods associated with enhanced mobile broadband (eMBB), massive machine type communications (mMTC), and ultra-reliable low latency communications (URLLC) may be incorporated in the 5G NR telecommunication standard, while other aspects may be incorporated in the 4G LTE standard. As mobile broadband technologies are part of a continuous evolution, further improvements in mobile broadband remain useful to continue the progression of such technologies.

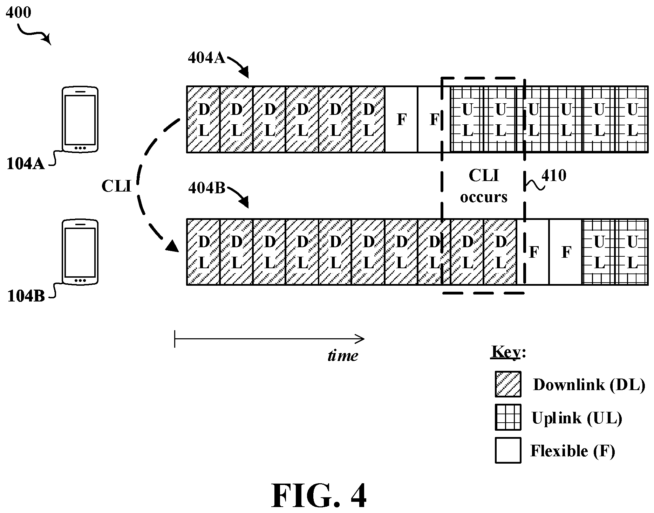

FIG. 4 illustrates a diagram 400 of an example of cross-link interference (CLI) between two wireless communication devices (e.g., UEs 104A-B of FIG. 1) of a wireless communication system (e.g., wireless communication system 100 of FIG. 1). CLI may generally refer to interference (e.g., unwanted signal) transmitted by one UE (e.g., first UE 104A) that may be received by another UE (e.g., second UE 104B), which may be nearby (e.g., proximate) to the transmitting UE.

In some aspects, CLI may occur when a wireless communication system, e.g., one or more base stations 102, configures different time-domain duplexed (TDD) configurations (e.g., downlink and uplink slot formats) to nearby UEs. For example, as shown in FIG. 4, a first UE 104A may be configured with a first TDD configuration 404A and a second UE 104B may be configured with a second TDD configuration 404B. The first TDD configuration 404A and the second TDD configuration 404B may differ from each other. For example, the first UE 104A may be served by a first cell or base station 102 that configures the first UE 104A with the first TDD configuration 404A and the second UE 104B may be served by a second cell or base station 102 that configures the second UE 104B with the second TDD configuration 404B. Alternatively or additionally, CLI may occur between the first UE 104A and the second UE 104B when they are controlled by a same network node.

Continuing to refer to FIG. 4, CLI may occur during overlapping time periods 410 (e.g., one or more OFDM symbols of a slot in a frame or subframe) in which the first UE 104A may be configured to transmit wireless communications concurrently with the second UE 104B being configured to receive wireless communications. In such aspects, the first UE 104A may be referred to as a transmitting UE or as an aggressor UE and the second UE 104B may be referred to as receiving UE or as a victim UE. That is, the second UE 104B may receive a wireless transmission from the first UE 104A as CLI during a downlink symbol of the second UE 104B if or when an uplink symbol of the first UE 104A collides or overlaps in time with at least one downlink symbol of the second UE 104B.

In some aspects, the base station 102 operating CLI management component 187 may instruct the second UE 104B to perform CLI measurements during the overlapping time periods 410 that the CLI occurs. That is, the wireless communication system may configure one or more CLI measurement resources for measuring CLI by the second UE 104B. The CLI measurements may be based on one or more measurements of a reference signal received by the second UE 104B, such as a reference signal received power (RSRP), a received signal strength indicator (RSSI), a signal-to-noise ratio (SNR), and a signal-to-interference-plus-noise ratio (SINR). For example, the reference signal may comprise a sounding reference signal (SRS). In other optional or additional aspects, the reference signal may be transmitted periodically to the second UE 104B and the second UE 104B may be configured to periodically perform the CLI measurements on the received reference signal. In other optional or additional aspects, the first UE 104A may not transmit a dedicated signal to the second UE 104B for the CLI measurements nor may the first UE 104A be notified that the CLI measurements are being performed based on the wireless transmissions of the first UE 104A (e.g., the interfering wireless transmissions).

In other optional or additional aspects, two or more aggressor UEs (e.g., first UE 104A) may perform wireless transmissions that collide with the victim UE (e.g., second UE 104B). In such aspects, the second UE 104B may be configured to perform CLI measurements for a particular aggressor UE (e.g., first UE 104A). For example, the second UE 104B may be configured to measure a RSRP corresponding to the first UE 104A. Alternatively or additionally, the second UE 104B may be configured to perform CLI measurements on multiple aggressor UEs.

In other optional or additional aspects, the base station 102 operating CLI management component 187 may configure the second UE 104B to transmit a CLI measurement report comprising one or more CLI measurements. Based on the CLI measurement report, the wireless communication system, e.g., the base station 102 operating CLI management component 187, may determine whether to perform CLI mitigation procedures. For example, the wireless communication system may adjust the scheduling (e.g., TDD configuration) of the aggressor UE (e.g., first UE 104A) and/or of the victim UE (e.g., second UE 104B) to avoid collisions and/or balance throughput of the different UEs.

In some aspects, signaling and/or procedures for performing measurements of a CLI caused by an aggressor UE (e.g., first UE 104A) by a victim UE (e.g., second UE 104B) may be described in one or more regulations and/or standards (e.g., 3GPP).

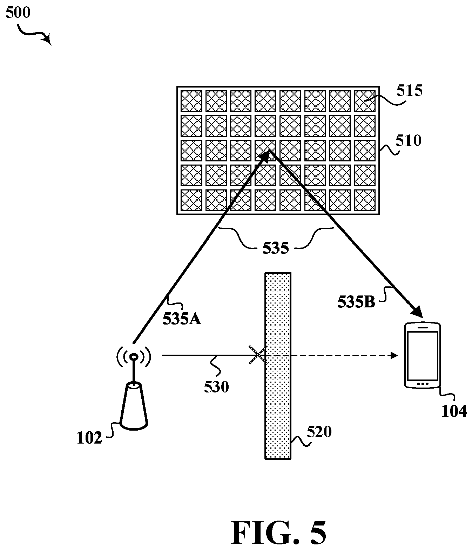

FIG. 5 is a diagram 500 illustrating an example of an intelligent reflecting surface (IRS). An IRS 510 (also known as a reconfigurable intelligent surface, a reflective intelligent surface, or a software-controlled metasurface) may comprise a passive panel surface with a large number of reconfigurable elements 515 that may be dynamically configured to manipulate reflection characteristics of the IRS 510. That is, the IRS 510 may be a passive device that may be configured to change a direction of a reflection of incident signals (e.g., beams, waves) without injecting additional power to the reflected signals. For example, the IRS 510 may be configured with one or more reflection coefficients that may control the reflection characteristics of the IRS 510. For example, the reflection coefficients may comprise a reflection amplitude and/or a phase shift of an element 515 of the IRS 510. The reflection amplitude may be configured to adjust a portion of the power of the incident signal that is reflected by each element 515. For example, the reflection amplitude of a particular element 515 may be configured to reflect half (e.g., 50%, 0.5), all (e.g., 100%, 1.0), or none (e.g., 0%, 0.0) of the power of the incident signal. That is, the reflection amplitude value may be any value greater than or equal to zero (0.0) and less than or equal to one (1.0). Alternatively or additionally, each element 515 may be configured to inject a phase shift to the reflected signal. For example, the phase shift may be greater than or equal to zero (0.0) and less than 2π (approximately 6.28).

In some aspects, the IRS 510 may be configured to provide an alternate propagation path to a signal that may avoid (e.g., bypass) an obstruction and/or blockage (e.g., building, tree, change in elevation of the terrain) that may block a direct propagation path between two wireless communication devices. For example, a direct propagation path 530 between a network node 102 and a UE 104 may be blocked by an obstruction 520, and as illustrated by the dashed line the propagation path 530 will not reach the UE 104. As shown in FIG. 5, the IRS 510 may be configured to provide an alternate propagation path (e.g., 535A-B, hereinafter "535," generally) between the network node 102 and the UE 104. That is, the IRS 510 may be configured to adjust an amplitude and/or phase shift of a signal 535A transmitted by the network node 102 such that a reflected signal 535B reaches the UE 104.

In other optional or additional aspects, beyond the illustrated configuration that enhances coverage by avoiding dead zones, the IRS 510 may be deployed by a wireless communication system to provide a number of other network topology enhancements. For example, a wireless communication device may use a hybrid deployment of one or more active base stations 102 and/or access points and one or more passive IRSs 510 to transmit a copy of a signal to another wireless communication device (e.g., to provide transmit diversity), and, as such, may enhance network throughput. That is, a wireless communication device may transmit a same signal to another wireless communication device using both a direct propagation path and an alternate propagation path created by the IRS 510. In another example, the IRS 510 may enhance physical layer security by cancelling a signal reflection before the signal may be received by an unauthorized (e.g., eavesdropping) device. Further, the IRS 510 may be used for wireless information and power transfer in an Internet of Things (IoT) network.

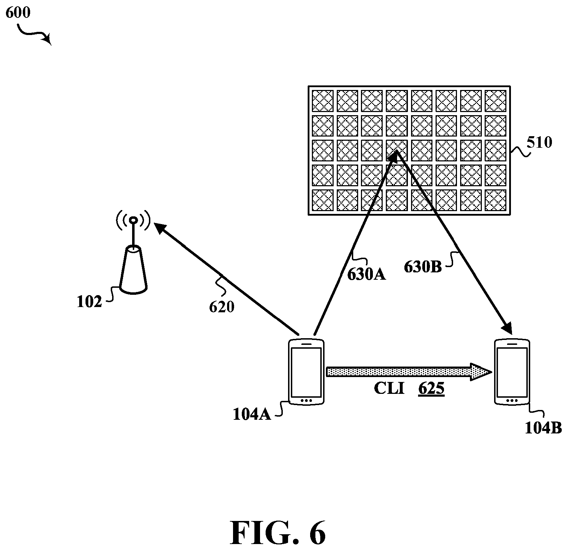

FIG. 6 illustrates a diagram of a wireless communication system 600 with an IRS 510. The architecture of the wireless communication system 600 depicted in FIG. 6 may be similar in many respects to the architecture of the wireless communication system 100 described above in reference to FIG. 1, and may include additional features not mentioned above. Some of the elements of the wireless communication system 100 described above have been omitted for the sake of simplicity. The network node 102 may include a CLI management component 187.

As noted above, the IRS 510 IRS may introduce an additional propagation path that can have either a constructive effect (i.e., increase the reception power) or a destructive effect (i.e., reduce the interference). For example, the interference at a second UE 104B from a first UE 104A could be mitigated by the reflected signal from the IRS 510 if the reflection is destructive. In this case, the base station 102 may program the IRS 510 with different coefficients and configure the victim UE, e.g., the second UE 104B, to measure which coefficient has the best CLI mitigation effect, i.e., with the lowest CLI strength (lowest RSRP or RSSI).

For example, an aspect, the first UE 104A may be transmitting an uplink signal 620 to the network node 102. The transmission of the uplink signal 620 may also be received by the second UE 104B as CLI 625. That is, as discussed above in reference to FIG. 4, the second UE 104B may receive a wireless transmission 625 from the first UE 104A as CLI during a downlink symbol of the second UE 104B if or when an uplink symbol of the first UE 104A collides with at least one downlink symbol of the second UE 104B.

In other aspects, the transmission of the uplink signal 620 may also include transmission of a signal 630A directed towards an IRS 510. For example, the signal 630A may be transmitted via a sidelobe of a beam used to transmit the uplink signal 620.

In some aspects, the IRS 510 may be configured to create an alternate propagation path for the signal 630A transmitted by the first UE 104A such that the reflected signal 630B reaches the second UE 104B to destructively interfere with the CLI 625 to reduce or eliminate the interference to the second UE 104B. For instance, the IRS 510 may be further configured to adjust an amplitude and/or phase shift of the signal 630A such that the reflected signal 630B has a destructive effect on the CLI signal 625. That is, the signal 630B may be configured to reduce an interference caused by the CLI signal 625. In an alternate case, the IRS 510 may be configured to adjust the amplitude and/or the phase shift of a reflected signal such that the reflected signal has a constructive effect on a signal that the second UE 104B is having trouble receiving (i.e., increases received power of the signal).

In other aspects, the IRS 510 may be configured with different reflection coefficients and the second UE 104B may be configured to perform CLI measurements, as described above in reference to FIG. 4, for each of the different reflection coefficients. The resulting CLI measurement reports of the CLI measurements corresponding to each of the difference reflection coefficients may be used to determine at least one reflection coefficient for configuring the IRS 510 that may mitigate the CLI (e.g., reduce power level of CLI signal 625) caused by the first UE 104A on the second UE 104B. For example, a particular reflection coefficient that may correspond with a minimum (e.g., lowest) CLI measurement may be used to configure the IRS 510.

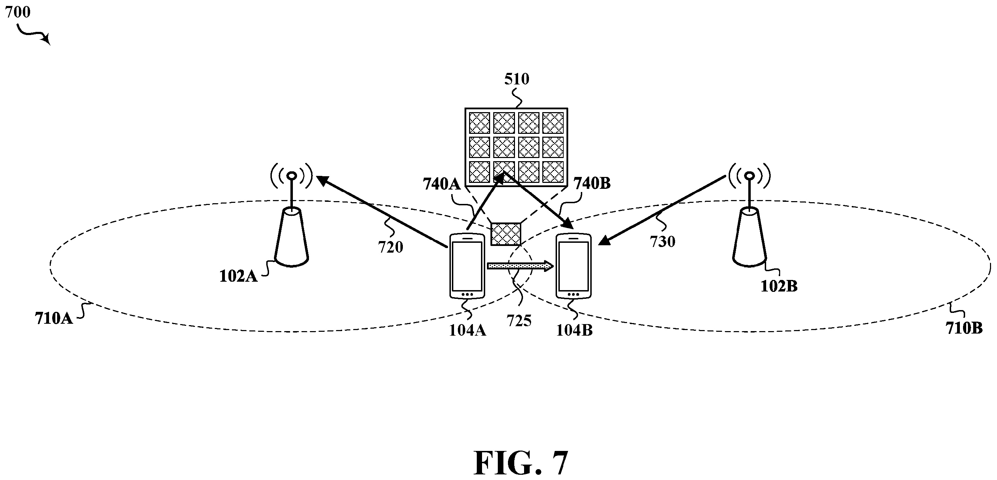

FIG. 7 illustrates a diagram of a multi-cell wireless communication system 700 with an IRS 510. The architecture of the wireless communication system 700 depicted in FIG. 7 may be similar in many respects to the architecture of the wireless communication systems 100 and 600 described above in reference to FIGS. 1 and 6, and may include additional features not mentioned above. Some of the elements of the wireless communication systems 100 and 600 described above have been omitted for the sake of simplicity. The network nodes 102A-B may include a CLI management component 187.

The multi-cell wireless communication system 700 may include a first network node 102A (e.g., base station, gNB) having a cell 710A and controlling a first UE 104A. That is, the cell 710A may be the serving cell of the first UE 104A. The multi-cell wireless communication system 700 may further include a second network node 102B (e.g., base station, gNB) having a cell 710B and controlling a second UE 104B. That is, the cell 710B may be the serving cell of the second UE 104B. As described above in reference to FIGS. 4 and 6, the first UE 104A may transmit an uplink signal 720 that may cause a CLI signal 725 to collide with reception of downlink signal 730 at the second UE 104B. Alternatively or additionally, the IRS 510 may be configured to provide an alternate propagation path (e.g., 740A-B) that may mitigate effects of the CLI signal 725 on the second UE 104B.

In some aspects, the IRS 510 may be controlled by the second network node 102B. In such aspects, the second network node 102B may directly configure the IRS 510 to mitigate the effects of the CLI signal 725 on the second UE 104B.

In other aspects, the IRS 510 may be controlled by the first network node 102A. In such aspects, as described in further detail below, the first network node 102A and the second network node 102B may exchange network information such that the first network node 102A and the second network node 102B may configure the second UE 104B to perform CLI measurements with one or more different configurations of the IRS 510 in order for the first network node 102A to configure the IRS 510 with a configuration that may mitigate the effects of the CLI signal 725 on the second UE 104B.

In some aspects, one or more regulations and/or standards (e.g., 3GPP) may describe the exchange of network information between network nodes for performing measurements of a CLI caused by an aggressor UE (e.g., first UE 104A) on a victim UE (e.g., second UE 104B). For example, a network node controlling the aggressor UE (e.g., first network node 102A) may provide, as part of the network information exchange, slot format information (e.g., TDD configuration) to the network node controlling the victim UE (e.g., second network node 102B). The second network node 102B may configure the second UE 104B to perform CLI measurements according to the slot format information provided by the first network node 102A. In addition, the second network node 102B may provide, as part of the network information exchange, revised slot format information to the first network node 102A to adjust transmit/receive scheduling of the first UE 104A to mitigate the CLI.

In other optional or additional aspects, the network information exchange may include indications of an intended downlink/uplink configuration, such as in time-domain indication, and a per-slot based OFDM symbol level UL/DL region indications. The remaining region, which is not indicated as DL or UL, may be unused or may be flexible. Also, in some cases, the indicated configuration may be assumed to be valid until a new configuration is received. Alternatively or additionally, periodicity and/or numerology (e.g., subcarrier spacing (SCS), CP length) may be configured. In other optional or additional aspects, the intended downlink/uplink configuration may include information for indicating a slot within a periodicity, and/or indications of downlink/uplink regions for each slot (e.g., all downlink symbols in the slot, all uplink symbols in the slot, a number of downlink symbols and/or a number of uplink symbols in the slot).

However, the network information exchange described above may not account for the use of an IRS to mitigate the CLI. As such, aspects presented herein provide for multiple manners for exchanging network information between network nodes (e.g., base stations 102A-B) to configure an IRS (e.g., IRS 510) to mitigate CLI.

Continuing to refer to FIG. 7, in some aspects, the IRS 510 may be located at a nearby (e.g., proximate) location to the UEs 104A-B. For example, distances between the IRS 510 and each of the UEs 104A-B may be less than a certain distance threshold, and/or the IRS 510 is in the coverage region of at least the first UE 102A in this scenario. Alternatively or additionally, the IRS 510 may not be controlled by the second network node 102B. That is, the IRS 510 may be controlled by the first network node 102A. In such aspects, the first network node 102A may be configured to apply one or more reflection coefficients to the IRS 510 that may mitigate (e.g., minimize) a received power level of the CLI signal 725 by the second UE 104B. That is, the first network node 102A may be configured to exchange network information with the second network node 102B to program reflection coefficients for the IRS 510 for measuring CLI and mitigating the CLI if or when the IRS 510 may be controlled by a base station (e.g., first network node 102A) other than the serving base station (e.g., second network node 102B) of the victim UE (e.g., second UE 104B).

As discussed in further detail below, the network information exchange may include the first network node 102A configuring a set of reflection coefficients for the IRS 510 to perform CLI measurements. In some aspects, the second network node 102B may configure CLI measurements to be performed by the second UE 104B according to the set of reflection coefficients. The network information exchange may further include the second network node 102B reporting, to the first network node 102A, CLI measurement information corresponding to the CLI measurements. The CLI measurement information may indicate a set of reflection coefficients that may mitigate the CLI from the first UE 104A to the second UE 104B. The first network node 102A may configure the IRS 510 according to the CLI measurement information. In other aspects, the network information exchange procedure may be repeated to track dynamic variations of the CLI measured by the second UE 104B.

In some aspects, the first network node 102A may generate a reflection coefficient measurement configuration that comprises a set of reflection coefficients to be applied to the IRS 510 while the second UE 104B performs CLI measurements for each reflection coefficient of the set of reflection coefficients. In some aspects, the first network node 102A may determine the set of reflection coefficients according to a predetermined sets of reflection coefficients (e.g., a codebook). In other aspects, the first network node 102A may use a default set of reflection coefficients.

Alternatively or additionally, the reflection coefficient measurement configuration may comprise a time-domain pattern of the set of different reflection coefficients. That is, the reflection coefficient measurement configuration may indicate a time duration of use by the IRS 510 of each of the set of different reflection coefficients. In some aspects, the reflection coefficient measurement configuration may indicate a starting time of use of a first one of the set of different reflection coefficients. In other aspects, the reflection coefficient measurement configuration may indicate a number of reflection coefficients in the set of different reflection coefficients. In other aspects, the reflection coefficient measurement configuration may comprise an indication of a value corresponding to each reflection coefficient of the set of different reflection coefficients. The value may include amplitude and phase information corresponding to at least one element 515 of the IRS 510. Alternative or additionally, the value may correspond to an index value indicating the amplitude and the phase information corresponding to at least one element 515 of the IRS 510. In other aspects, the reflection coefficient measurement configuration may comprise a time-domain pattern indicator that identifies the time-domain pattern.

In some aspects, the time duration and/or the starting time may be indicated using time units (e.g., milliseconds (msec), microseconds (µsec)). Alternatively or additionally, the time duration and/or the starting time may be indicated using slot units. In such aspects, a reference sub-carrier spacing (SCS) may be provided to determine a slot duration of the time-domain pattern.

In other aspects, the time duration of each reflection coefficient in the time-domain pattern may be fixed. That is, each reflection coefficient in the time-domain pattern may be applied for a same time duration. Alternatively or additionally, the time duration of the reflection coefficients may be variable. That is, the reflection coefficients in the time-domain pattern may be applied for at least one different time duration.

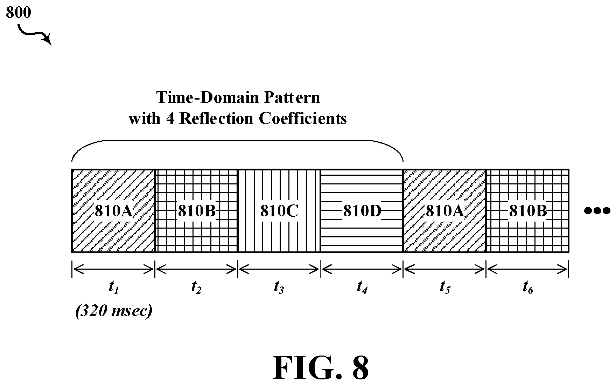

FIG. 8 is a diagram illustrating an example of a time-domain pattern 800 of a set of different reflection coefficients. In this example, which should not be construed as limiting, the time-domain pattern 800 may comprise four (4) different reflection coefficients 810A-D (hereinafter "810," generally) that are applied to the IRS 510 for a respective time duration, such as but not limited to 320 msec each. The reflection coefficients 810 may be applied in a repeating pattern over time, as shown in FIG. 8. That is, the first reflection coefficient 810A may be re-applied (e.g., at t₅) after the time duration (e.g., t₄) for the fourth reflection coefficient 810D has elapsed.

The first network node 102A may, according to the time-domain pattern 800, configure the IRS 510 with each of the reflection coefficients 810 according to the time-domain pattern 800 to enable the second UE 104B to perform CLI measurements according to the time-domain pattern 800. That is, the first network node 102A may have exchanged network information with the second network node 102B that comprises reflection coefficient measurement configuration indicating the time-domain pattern 800. In response to obtaining the reflection coefficient measurement configuration, the second network node 102B may transmit, to the second UE, a CLI measurement configuration for use by the second UE 104B to perform one or more CLI measurements during a corresponding time duration of each reflection coefficient in the time-domain pattern 800. For example, the second UE 104B may, according to the CLI measurement configuration, collect first CLI measurements corresponding to reflection coefficient 810A during a first time period t₁ (e.g., 320 msec) of the time-domain pattern 800. After the first time period t₁ elapses, the second UE 104B may switch to collecting second CLI measurements corresponding to reflection coefficient 810B during a second time period t₂ of the time-domain pattern 800. After the second time period t₂ elapses, the second UE 104B may switch to collecting third CLI measurements corresponding to reflection coefficient 810C during a third time period t₃ of the time-domain pattern 800. After the third period t₃ elapses, the second UE 104B may switch to collecting fourth CLI measurements corresponding to reflection coefficient 810D during a fourth time period t₄ of the time-domain pattern 800. After the fourth time period t₄ elapses, the time-domain pattern may repeat with the first CLI measurements corresponding to reflection coefficient 810A.

In some aspects, the second UE 104B may reset filters, accumulators, and the like that may be used to perform the CLI measurements as part of switching from collecting CLI measurements corresponding to one reflection coefficient to collecting CLI measurements corresponding to another reflection coefficient. That is, the second network node 102B may configure the second UE 104B to perform Layer 3 CLI measurement filtering separately for each different reflection coefficient of the IRS 510.

In other aspects, the second UE 104B may transmit a CLI measurement report after each time period (e.g., t₁, t₂, t₃, t₄, t₅, t₆) has elapsed. In other optional or additional aspects, the second UE 104B may transmit a CLI measurement report after the time-domain pattern has been completed (e.g., after t₄ has elapsed). In other optional or additional aspects, the second UE 104B may transmit a CLI measurement report as requested by the second network node 102B.

Although the example time-domain pattern 800 illustrated in FIG. 8 shows a particular arrangement and order of reflection coefficients 810, it should be understood that the quantity, arrangement (e.g., pattern), and repetition of the reflection coefficients 810 may differ without deviating from the scope of the present disclosure. Notably, the present disclosure may be employed by any wireless communication system CLI management with IRSs is to be performed.

In some aspects, the network information exchange for managing CLI with the IRS 510 between the first network node 102A and the second network node 102B may be initiated by the second network node 102B. For example, the second network node 102B may transmit a request, to the first network node 102A, requesting generation of a reflection coefficient measurement configuration to be applied to the IRS 510. Alternatively or additionally, the request may comprise a requested reflection coefficient measurement configuration generated by the second network node 102B. In such aspects, the second network node 102B may configure the CLI measurements to be performed by the second UE 104B according to the requested reflection coefficient measurement configuration generated by the second network node 102B, or according to a different configuration determined by the first network node 102A.

In other aspects, the second network node 102B may transmit the request in response to determining that a performance degradation of the second UE 104B may be caused by CLI. Alternatively or additionally, the second network node 102B may transmit the request in response to determining that the second UE 104B may located at a location nearby (e.g., proximate) to the IRS 510.

In other optional or additional aspects, the network information exchange for managing CLI with the IRS 510 between the first network node 102A and the second network node 102B may be initiated by the first network node 102A. For example, the first network node 102A may transmit, to the second network node 102B and to the IRS, network information comprising the reflection coefficient measurement configuration, as an indication that the network information exchange for managing CLI with the IRS 510 is being initiated. In some aspects, the first network node 102A may transmit the network information in response to a determination that a roaming UE has moved to a location that may be nearby (e.g., proximate) to another UE and/or to the IRS 510.

In any case, the second network node 102B will receive a reflection coefficient measurement configuration from the first network node 102A and then configure the second UE 104B to perform CLI measurements based on the received reflection coefficient measurement configuration.

In some aspects, the second network node 102B may receive one or more CLI measurement reports from the second UE 104B in response to having configured the second UE 104B to perform one or more CLI measurements according to the reflection coefficients indicated by the network information. The CLI measurement reports may indicate a CLI strength corresponding to each reflection coefficient.

The second network node 102B may be configured to transmit CLI measurement information to the first network node 102A based on the CLI measurements received from the second UE 104B. In some aspects, the CLI measurement information may comprise a reflection coefficient corresponding to a minimum CLI strength measured by the second UE 104B. In other optional or additional aspects, the CLI measurement information may comprise a sorted set of reflection coefficients that may have been sorted according to a corresponding CLI strength. The sorting order may be an ascending order or a descending order. In other optional or additional aspects, the CLI measurement information may comprise CLI measurements corresponding to a direct propagation path between the first UE 104A and the second UE 104B for each reflection coefficient of the set of different reflection coefficients. Alternatively or additionally, the CLI measurement information may comprise CLI measurements corresponding to an indirect propagation path, via the IRS 510, between the first UE 104A and the second UE 104B for each reflection coefficient of the set of different reflection coefficients.

The first network node 102A may be configured to identify a particular reflection coefficient from a set of different reflection coefficients associated with the reflection coefficient measurement configuration based on the CLI measurement information. For example, the first network node 102A may identify the reflection coefficient corresponding to the minimum CLI strength indicated by the CLI measurement information as the particular reflection coefficient for configuring the IRS 510. Alternatively or additionally, the first network node 102A may identify the reflection coefficient according to the sorted set of reflection coefficients indicated by the CLI measurement information. In other aspects, the first network node 102A may identify the reflection coefficient according to processing performed on the CLI measurement information, such as spatial analysis based on the CLI measurements corresponding to the direct propagation path between the first UE 104A and the second UE 104B and the indirect propagation path between the first UE 104A and the second UE 104B.

In other optional or additional aspects, the first network node 102A may be configured to selecting a particular reflection coefficient from the set of different reflection coefficients have a corresponding CLI measurement that meets a CLI measurement criteria. The CLI measurement criteria may comprise selecting a reflection coefficient with a lowest (e.g., minimum) CLI. Alternatively or additionally, the CLI measurement criteria may comprise selecting an average CLI measurement. In other aspects, the CLI measurement criteria may comprise selecting a reflection coefficient that minimizes CLI measurements for multiple UEs.

The first network node 102A may be further configured to apply (e.g., configure) the identified reflection coefficient to the IRS 510. As such, the IRS 510 may be configured to reflect a destructive signal to the second UE 104B that may mitigate the effects of CLI from the first UE 104A.

Thus, aspects presented herein provide for exchanging network information between network nodes (e.g., base stations 102A-B) to manage CLI with IRSs (e.g., IRS 510). Further, aspects presented herein may reduce interference and increase resource efficiency, when compared to a conventional communication system.

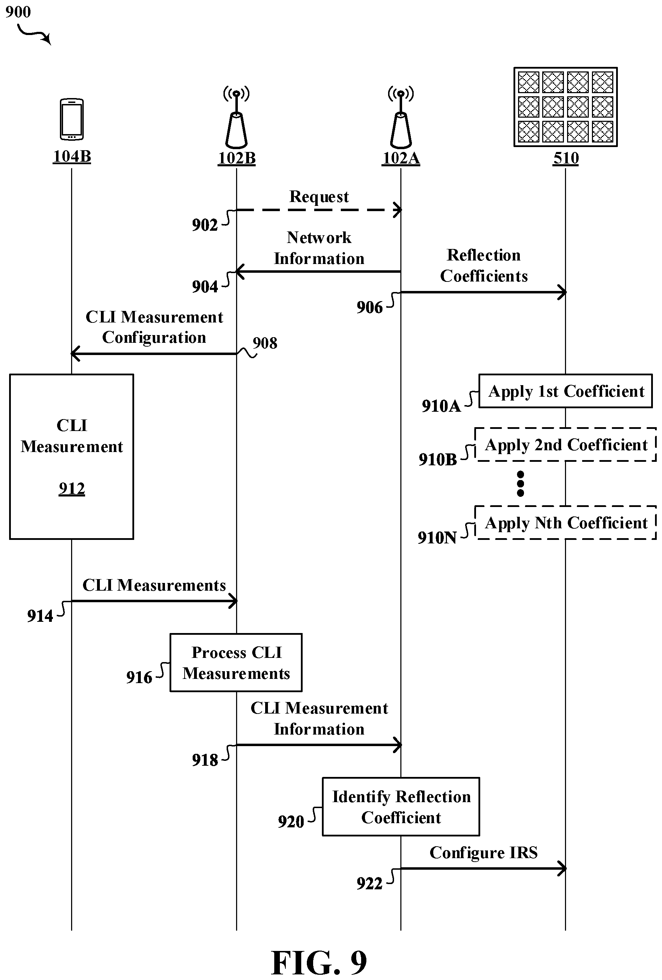

FIG. 9 illustrates a diagram 900 of an example of a network information exchange for CLI management with an IRS in a wireless communication system. The wireless communication system depicted in FIG. 9 may be similar in many respects to the architecture of the wireless communication systems 100, 600, and 700 described above in reference to FIGS. 1, 6, and 7, and may include additional features not mentioned above. Some of the elements of the wireless communication systems 100, 600, and 700 described above have been omitted for the sake of simplicity. The network nodes 102A-B may include a CLI management component 187.

In some aspects, the network information exchange may be initiated by the second network node 102B, at 902, transmitting a request to the first network node 102A. The request may instruct the first network node 102A to generate a reflection coefficient measurement configuration to be applied to the IRS 510 and to the second UE 104B. Alternatively or additionally, the request may comprise a requested reflection coefficient measurement configuration generated by the second network node 102B. In other aspects, the second network node 102B may transmit the request in response to determining that a performance degradation of the second UE 104B may be caused by CLI. Alternatively or additionally, the second network node 102B may transmit the request in response to determining that the second UE 104B may located at a location nearby (e.g., proximate) to the IRS 510.

At 904, the first network node 102A may transmit network information to the second network node 102B. As described above in reference to FIGS. 7 and 8, the network information may comprise a reflection coefficient measurement configuration. The reflection coefficient measurement configuration may comprise a time-domain pattern of the set of different reflection coefficients and/or an indication of the set of different reflection coefficients. That is, the reflection coefficient measurement configuration may indicate a set of reflection coefficients that will be applied to the IRS 510 to perform CLI measurements that may indicate at least one reflection coefficient that may mitigate effects of CLI on the second UE 104B from transmissions by the first UE 104A.

In some aspects, the first network node 102A may generate the reflection coefficient measurement configuration from predetermined configurations. In other aspects, the first network node 102A may obtain the reflection coefficient measurement configuration from the request transmitted by the second network node 102B at 902.

The first network node 102A may transmit, at 906, the reflection coefficient measurement configuration to the IRS 510. That is, the first network node 102A may configure the IRS 510 to apply one or more reflection coefficients in accordance to the reflection coefficient measurement configuration. For example, if or when the reflection coefficient measurement configuration indicates a time-domain pattern, the IRS 510 may be configured to apply, at 910A-N, the set of different reflection coefficients during the time periods indicated by the time-domain pattern.

In response to receiving, at 904, the network information from the first network node 102A, the second network node 102B may, at 908, transmit a CLI measurement configuration to the second UE 104B.

At 912, the second UE 104B may perform one or more CLI measurements corresponding to at least one reflection coefficient of a set of different reflection coefficients associated with the reflection coefficient measurement configuration, as described above in reference to FIGS. 7 and 8.

The second UE 104B, at 914, transmit, to the second network node 102B, one or more CLI measurements corresponding to at least one reflection coefficient. At 916, the second network node 102B may process the CLI measurements received from the second UE 104B. For example, as described above in reference to FIGS. 7 and 8, the second network node 102B may choose a reflection coefficient corresponding to a lowest CLI strength. Alternatively or additionally, the second network node 102B may create a sorted list of reflection coefficients according to corresponding CLI strengths. The second network node 102B may, at 918, transmit the processed CLI measurements to the first network node 102A as CLI measurement information.

At 920, the first network node 102A may identify a reflection coefficient from a set of different reflection coefficients associated with the CLI measurement information. In some aspects, the first network node 102A may obtain the reflection coefficient indicated by the CLI measurement information as corresponding to a lowest CLI strength. Alternatively or additionally, the first network node 102A may identify the reflection coefficient according to the sorted list of reflection coefficients indicated by the CLI measurement information.

The first network node 102A may, at 922, configure the IRS 510 with the identified reflection coefficient. As such, the IRS 510 may be configured to reflect a destructive signal to the second UE 104B that may mitigate the effects of CLI from the first UE 104A.

Thus, aspects presented herein provide for exchanging network information between network nodes (e.g., base stations 102A-B) to manage CLI with IRSs (e.g., IRS 510). Further, aspects presented herein may reduce interference and increase resource efficiency, when compared to a conventional communication system.

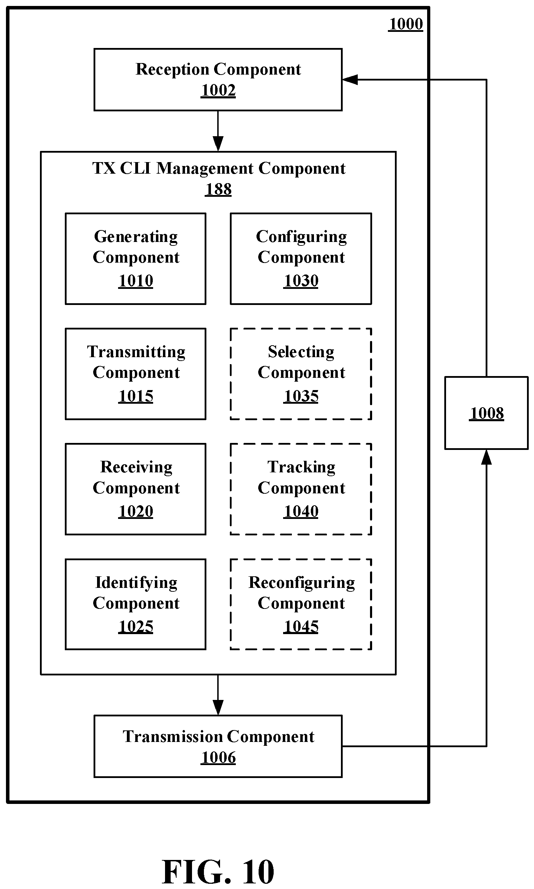

FIG. 10 is a block diagram of an example apparatus 1000 for wireless communication. The apparatus 1000 may be a base station 102 (e.g., base station 102 of FIGS. 1 and 3-9) or a base station 102 may include the apparatus 1000. In some aspects, the apparatus 1000 may include a reception component 1002 configured to receive wireless communications from another apparatus (e.g., apparatus 1008), a TX CLI management component 188 configured to manage CLI using IRSs, a transmission component 1006 configured to transmit wireless communications to another apparatus (e.g., apparatus 1008), and which may be in communication with one another (e.g., via one or more buses or electrical connections). As shown, the apparatus 1000 may be in communication with another apparatus 1008 (such as a base station 102, or another wireless communication device) using the reception component 1002 and the transmission component 1006.

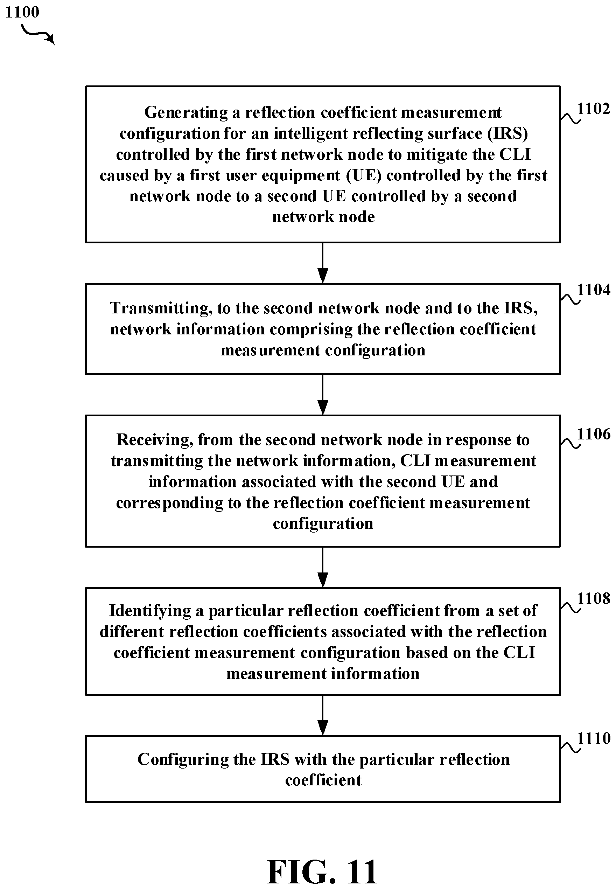

In some aspects, the apparatus 1000 may be configured to perform one or more operations described herein in connection with FIGS. 1 and 3-9. Alternatively or additionally, the apparatus 1000 may be configured to perform one or more processes described herein, such as method 1100 of FIGS. 11-15. In some aspects, the apparatus 1000 may include one or more components of the base station 102 described above in connection with FIGS. 1 and 3-9.

The reception component 1002 may receive communications, such as reference signals, control information, data communications, or a combination thereof, from the apparatus 1008. The reception component 1002 may provide received communications to one or more other components of the apparatus 1000, such as the TX CLI management component 188. In some aspects, the reception component 1002 may perform signal processing on the received communications (such as filtering, amplification, demodulation, analog-to-digital conversion, demultiplexing, de-interleaving, de-mapping, equalization, interference cancellation, or decoding, among other examples), and may provide the processed signals to the one or more other components. In some aspects, the reception component 1002 may include one or more antennas, a demodulator, a MIMO detector, a receive processor, a controller/processor, a memory, or a combination thereof, of the base station 102 described above in connection with FIGS. 1 and 3-9.

The transmission component 1006 may transmit communications, such as reference signals, control information, data communications, or a combination thereof, to the apparatus 1008. In some aspects, the TX CLI management component 188 may generate communications and may transmit the generated communications to the transmission component 1006 for transmission to the apparatus 1008. In some aspects, the transmission component 1006 may perform signal processing on the generated communications (such as filtering, amplification, modulation, digital-to-analog conversion, multiplexing, interleaving, mapping, or encoding, among other examples), and may transmit the processed signals to the apparatus 1008. In other aspects, the transmission component 1006 may include one or more antennas, a modulator, a transmit MIMO processor, a transmit processor, a controller/processor, a memory, or a combination thereof, of the base station 102 described above in connection with FIGS. 1 and 3-9. In some aspects, the transmission component 1006 may be co-located with the reception component 1002 in a transceiver or transceiver component.

The TX CLI management component 188 may be configured to manage CLI using IRSs. In some aspects, the TX CLI management component 188 may include a set of components, such as a generating component 1010 configured to generate reflection coefficient measurement configurations, a transmitting component 1015 configured to transmit network information, a receiving component 1020 configured to receive CLI measurement information, an identifying component 1025 configured to identify particular reflection coefficients from sets of different reflection coefficients, and a configuring component 1030 configured to configure the IRS 510.

Alternatively or additionally, the TX CLI management component 188 may further include a selecting component 1035 configured to select particular reflection coefficients from sets of different reflection coefficients, a tracking component 1040 configured to track variations of CLI measurements, and a reconfiguring component 1045 configured to reconfigure particular reflection coefficients used by the IRS 510.

In other optional or additional aspects, the set of components may be separate and distinct from the TX CLI management component 188. In other aspects, one or more components of the set of components may include or may be implemented within a controller/processor (e.g., the TX processor 316, the RX processor 313, the controller/processor 315), a memory (e.g., the memory 317), or a combination thereof, of the base station 102 described in FIGS. 1 and 3-9. Alternatively or additionally, one or more components of the set of components may be implemented at least in part as software stored in a memory, such as the memory 317. For example, a component (or a portion of a component) may be implemented as computer-executable instructions or code stored in a computer-readable medium (e.g., a non-transitory computer-readable medium) and executable by a controller or a processor to perform the functions or operations of the component.

The number and arrangement of components shown in FIG. 10 are provided as an example. In practice, there may be additional components, fewer components, different components, or differently arranged components than those shown in FIG. 10. Furthermore, two or more components shown in FIG. 10 may be implemented within a single component, or a single component shown in FIG. 10 may be implemented as multiple, distributed components. Additionally or alternatively, a set of (one or more) components shown in FIG. 10 may perform one or more functions described as being performed by another set of components shown in FIGS. 1 and 3-9.

Referring to FIGS. 10-15, in operation, a base station 102 may perform a method 1100 of managing CLI. The method 1100 may be performed by the base station 102 (which may include the memory 317 and which may be the entire base station 102 and/or one or more components of the base station 102 such as the TX CLI management component 188, the TX processor 316, the RX processor 313, and/or the controller/processor 315). The method 1100 may be performed by the TX CLI management component 188 in communication with the another base station 102 (e.g., RX CLI management component 189).

At block 1102 of FIG. 11, the method 1100 includes generating a reflection coefficient measurement configuration for an intelligent reflecting surface (IRS) controlled by the first network node to mitigate the CLI caused by a first user equipment (UE) controlled by the first network node to a second UE controlled by a second network node. For example, in an aspect, the base station 102, the TX CLI management component 188, and/or the generating component 1010 may be configured to or may comprise means for generating a reflection coefficient measurement configuration for an IRS 510 controlled by the first network node 102A to mitigate the CLI caused by a UE 104A controlled by the first network node 102A to a second UE 104B controlled by a second network node 102B.

For example, the generating at block 1102 may include the reflection coefficient measurement configuration comprising a set of reflection coefficients.

In some aspects, the generating at block 1102 may include determining a set of reflection coefficients according to predetermined sets of reflection coefficients (e.g., a codebook). In other aspects, the generating at block 1102 may include accessing a default set of reflection coefficients for inclusion in the reflection coefficient measurement configuration.

Further, for example, the generating at block 1102 may be performed to select a set of reflection coefficients that are to be applied to the IRS 510 while the second UE 104B performs CLI measurements for each reflection coefficient of the set of reflection coefficients.

In other optional or additional aspects, the generating at block 1102 may include the reflection coefficient measurement configuration comprising at least one of a time-domain pattern of the set of different reflection coefficients or an indication of the set of different reflection coefficients, as described above in reference to FIG. 8.

In other optional or additional aspects, the generating at block 1102 may include the reflection coefficient measurement configuration identifying a time-domain pattern of the set of different reflection coefficients and comprising at least one of a time duration of use by the IRS 510 of each of the set of different reflection coefficients, a starting time of use of a first one of the set of different reflection coefficients, a number of reflection coefficients in the set of different reflection coefficients, an indication of a value corresponding to each reflection coefficient of the set of different reflection coefficients, or a time-domain pattern indicator that identifies the time-domain pattern, as described above in reference to FIG. 8.

In other optional or additional aspects, the generating at block 1102 may include at least one of the time duration or the starting time being indicated relative to a slot of a transmission frame, and the time-domain pattern further including a subcarrier spacing, as described above in reference to FIG. 8.

In other optional or additional aspects, the generating at block 1102 may include the reflection coefficient measurement configuration comprising each reflection coefficient of the set of different reflection coefficients, as described above in reference to FIG. 8.

At block 1104 of FIG. 11, the method 1100 includes transmitting, to the second network node and to the IRS, network information comprising the reflection coefficient measurement configuration. For example, in an aspect, the base station 102, the TX CLI management component 188, and/or the transmitting component 1015 may be configured to or may comprise means for transmitting, to the second network node 102B and to the IRS 510, network information comprising the reflection coefficient measurement configuration.

For example, the transmitting at block 1104 may include transmitting, to the second network node 102B and to the IRS 510, the network information comprising the reflection coefficient measurement configuration that was generated at block 1102.

In some aspects, the transmitting at block 1104 may include causing the second network node 102B to transmit, to the second UE, a CLI measurement configuration for use by the second UE 104B to perform one or more CLI measurements corresponding to at least one reflection coefficient of a set of different reflection coefficients associated with the reflection coefficient measurement configuration.

In other aspects, the transmitting at block 1104 may include causing the IRS 510 to switch reflective coefficient configurations as indicated by the network information such that the second UE 104B may perform one or more CLI measurements corresponding to at least one reflection coefficient of the set of different reflection coefficients associated with the reflection coefficient measurement configuration.

Further, for example, the transmitting at block 1104 may be performed to configure the IRS 510 and the second UE 104B to perform CLI measurements corresponding to the reflection coefficients indicated by the network information. The CLI measurements may be used to identify a reflection coefficient that may mitigate the effects of CLI on the second UE 104B from the first UE 104A.

At block 1106 of FIG. 11, the method 1100 includes receiving, from the second network node in response to transmitting the network information, CLI measurement information associated with the second UE and corresponding to the reflection coefficient measurement configuration. For example, in an aspect, the base station 102, the TX CLI management component 188, and/or the receiving component 1020 may be configured to or may comprise means for receiving, from the second network node 102B in response to transmitting the network information, CLI measurement information associated with the second UE 104B and corresponding to the reflection coefficient measurement configuration.

For example, the receiving at block 1106 may include receiving, from the second network node 102B, CLI measurement information corresponding to one or more CLI measurements performed by the second UE 104B. In some aspects, the CLI measurements may indicate a CLI strength corresponding to each reflective coefficient in the set of reflective coefficients comprised by the network information.

In some aspects, the CLI measurements may be based on one or more measurements of a reference signal received by the second UE 104B, such as a reference signal received power (RSRP), a received signal strength indicator (RSSI), a signal-to-noise ratio (SNR), and a signal-to-interference-plus-noise ratio (SINR).

Further, for example, the receiving at block 1106 may be performed to enable the first network node 102A to identify a particular reflective coefficient that may mitigate the effects of CLI on the second UE 104B from the first UE 104A.

At block 1108 of FIG. 11, the method 1100 includes identifying a particular reflection coefficient from a set of different reflection coefficients associated with the reflection coefficient measurement configuration based on the CLI measurement information. For example, in an aspect, the base station 102, the TX CLI management component 188, and/or the identifying component 1025 may be configured to or may comprise means for identifying a particular reflection coefficient from a set of different reflection coefficients associated with the reflection coefficient measurement configuration based on the CLI measurement information.

For example, the identifying at block 1108 may include identifying a reflection coefficient indicated by the CLI measurement information received at block 1106 as the particular reflection coefficient. That is, the second network node 102B may have identified the particular reflection coefficient from the set of different reflection coefficients associated with the reflection coefficient measurement configuration based on the CLI measurement information.

In some aspects, the identifying at block 1108 may include identifying the particular reflection coefficient according to CLI measurement information (e.g., CLI strengths) received at block 1106.

Further, for example, the identifying at block 1108 may be performed to determine a particular reflective coefficient that may mitigate the effects of CLI on the second UE 104B from the first UE 104A.

At block 1108 of FIG. 11, the method 1100 includes configuring the IRS with the particular reflection coefficient. For example, in an aspect, the base station 102, the TX CLI management component 188, and/or the configuring component 1030 may be configured to or may comprise means for configuring the IRS 510 with the particular reflection coefficient.

For example, the configuring at block 1110 may include transmitting, to the IRS 510, the particular reflective coefficient identified at block 1108. In some aspects, the configuring at block 1110 may include applying, to the IRS 510, a configuration comprising the particular reflective coefficient.

Further, for example, the configuring at block 1110 may be performed to configure the IRS 510 to create an alternate propagation path that directs a signal to the second UE 104B that may mitigate (e.g., reduce) the effects of CLI on the second UE 104B from a signal transmitted by the first UE 104A. Thus, aspects presented herein provide for exchanging network information between network nodes (e.g., base stations 102A-B) to manage CLI with IRSs (e.g., IRS 510). Further, aspects presented herein may reduce interference and increase resource efficiency, when compared to a conventional communication system.

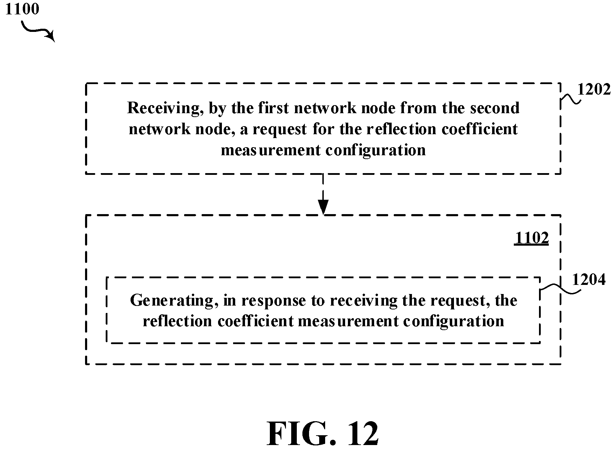

Referring to FIG. 12, in an optional or additional aspect that may be combined with any other aspect, at block 1202, the method 1100 may further include receiving, by the first network node from the second network node, a request for the reflection coefficient measurement configuration. For example, in an aspect, the base station 102, the TX CLI management component 188, and/or the receiving component 1020 may be configured to or may comprise means for receiving, by the first network node 102A from the second network node 102B, a request for the reflection coefficient measurement configuration.

For example, the receiving at block 1202 may include receiving, from the second network node 102B, a request to initiate a network information exchange to manage CLI with an IRS.

In some aspects, the receiving at block 1202 may include receiving a requested reflection coefficient measurement configuration generated by the second network node 102B.

Further, for example, the receiving at block 1202 may be performed to enable the second network node 102B that controls the second UE 104B to initiate a network information exchange to manage CLI at the second UE 104B with the IRS 510.

In this optional or additional aspect, at block 1204, the generating, at block 1102 of the method 1100, of the reflection coefficient measurement configuration for the IRS 510 controlled by the first network node 102A to mitigate the CLI caused by the first UE 104A controlled by the first network node 102A to the second UE 104B controlled by the second network node 102B comprises generating, in response to receiving the request, the reflection coefficient measurement configuration. For example, in an aspect, the base station 102, the TX CLI management component 188, and/or the generating component 1010 may be configured to or may comprise means for generating, in response to receiving the request, the reflection coefficient measurement configuration.

For example, the generating at block 1204 may include generating, in response to receiving the request, the reflection coefficient measurement configuration as described above in reference to block 1102.

In some aspects, the generating at block 1204 may include generating the reflection coefficient measurement configuration according to the requested reflection coefficient measurement configuration comprised by the request received at block 1202.

Further, for example, the generating at block 1204 may be performed to select a set of reflection coefficients that are to be applied to the IRS 510 while the second UE 104B performs CLI measurements for each reflection coefficient of the set of reflection coefficients.

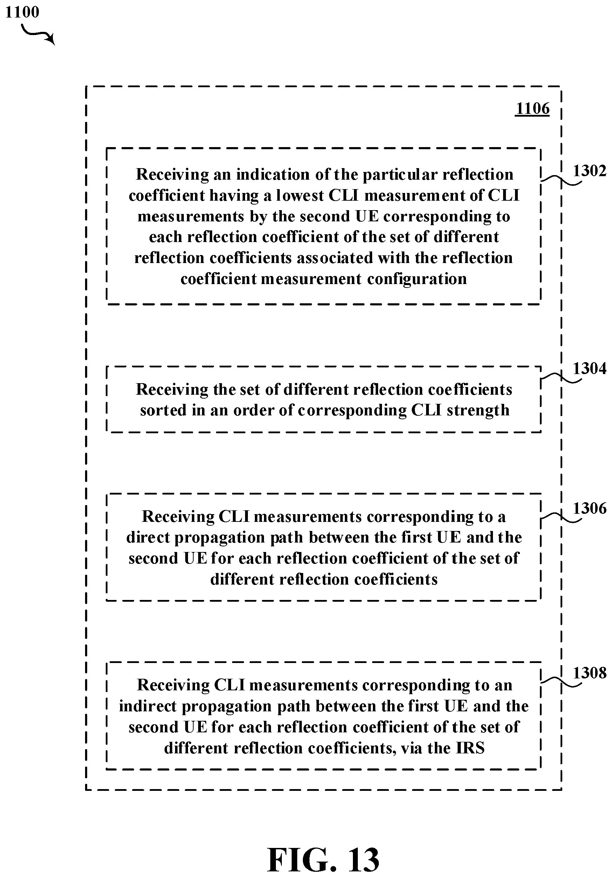

Referring to FIG. 13, in an optional or additional aspect that may be combined with any other aspect, at block 1302, the receiving, at block 1106 of the method 1100, from the second network node 102B in response to transmitting the network information, of the CLI measurement information associated with the second UE 104B and corresponding to the reflection coefficient measurement configuration comprises receiving an indication of the particular reflection coefficient having a lowest CLI measurement of CLI measurements by the second UE corresponding to each reflection coefficient of the set of different reflection coefficients associated with the reflection coefficient measurement configuration. For example, in an aspect, the base station 102, the TX CLI management component 188, and/or the receiving component 1020 may be configured to or may comprise means for receiving an indication of the particular reflection coefficient having a lowest CLI measurement of CLI measurements by the second UE 104B corresponding to each reflection coefficient of the set of different reflection coefficients associated with the reflection coefficient measurement configuration.

For example, the receiving at block 1302 may include receiving CLI measurement information comprising the indication of the particular reflection coefficient having been selected by the second network node 102B. The particular reflection coefficient selected by the network node 102B may have a lowest CLI measurement of CLI measurements by the second UE 104B corresponding to each reflection coefficient of the set of different reflection coefficients associated with the reflection coefficient measurement configuration.

In some aspects, the receiving at block 1302 may include identifying the reflection coefficient indicated by the CLI measurement information as the particular reflection coefficient for configuring the IRS 510.

Further, for example, the receiving at block 1302 may be performed to receive an indication of a particular reflection coefficient for configuring the IRS 510.

In another optional or additional aspect that may be combined with any other aspect, at block 1304, the receiving, at block 1106 of the method 1100, from the second network node 102B in response to transmitting the network information, of the CLI measurement information associated with the second UE 104B and corresponding to the reflection coefficient measurement configuration comprises receiving the set of different reflection coefficients sorted in an order of corresponding CLI strength. For example, in an aspect, the base station 102, the TX CLI management component 188, and/or the receiving component 1020 may be configured to or may comprise means for receiving the set of different reflection coefficients sorted in an order of corresponding CLI strength.

For example, the receiving at block 1304 may include identifying the particular reflection coefficient for configuring the IRS 510 according to the set of different reflection coefficients sorted in order of corresponding CLI strength. In some aspects, the receiving at block 1304 may include identifying a reflection coefficient corresponding to a lowest CLI strength as the particular reflection coefficient for configuring the IRS 510.

Further, for example, the receiving at block 1304 may be performed to receive CLI measurement information for identifying a particular reflection coefficient for configuring the IRS 510 that may mitigate the effects of CLI on the second UE 104B from the first UE 104A.

In another optional or additional aspect that may be combined with any other aspect, at block 1306, the receiving, at block 1106 of the method 1100, from the second network node 102B in response to transmitting the network information, of the CLI measurement information associated with the second UE 104B and corresponding to the reflection coefficient measurement configuration comprises receiving CLI measurements corresponding to a direct propagation path between the first UE and the second UE for each reflection coefficient of the set of different reflection coefficients. For example, in an aspect, the base station 102, the TX CLI management component 188, and/or the receiving component 1020 may be configured to or may comprise means for receiving CLI measurements corresponding to a direct propagation path between the first UE 104A and the second UE 104B for each reflection coefficient of the set of different reflection coefficients.

For example, the receiving at block 1306 may include performing processing, such as spatial analysis, based on the CLI measurements corresponding to a direct propagation path between the first UE 104A and the second UE 104B to identify the particular reflection coefficient for configuring the IRS 510.

Further, for example, the receiving at block 1306 may be performed to receive CLI measurement information for identifying a particular reflection coefficient for configuring the IRS 510 that may mitigate the effects of CLI on the second UE 104B from the first UE 104A.

In another optional or additional aspect that may be combined with any other aspect, at block 1308, the receiving, at block 1106 of the method 1100, from the second network node 102B in response to transmitting the network information, of the CLI measurement information associated with the second UE 104B and corresponding to the reflection coefficient measurement configuration comprises receiving CLI measurements corresponding to an indirect propagation path between the first UE and the second UE for each reflection coefficient of the set of different reflection coefficients, via the IRS. For example, in an aspect, the base station 102, the TX CLI management component 188, and/or the receiving component 1020 may be configured to or may comprise means for receiving CLI measurements corresponding to an indirect propagation path between the first UE 104A and the second UE 104B for each reflection coefficient of the set of different reflection coefficients, via the IRS 510.

For example, the receiving at block 1308 may include performing processing, such as spatial analysis, based on the CLI measurements corresponding to the indirect propagation path, via the IRS 510, between the first UE 104A and the second UE 104B to identify the particular reflection coefficient for configuring the IRS 510.

Further, for example, the receiving at block 1308 may be performed to receive CLI measurement information for identifying a particular reflection coefficient for configuring the IRS 510 that may mitigate the effects of CLI on the second UE 104B from the first UE 104A.

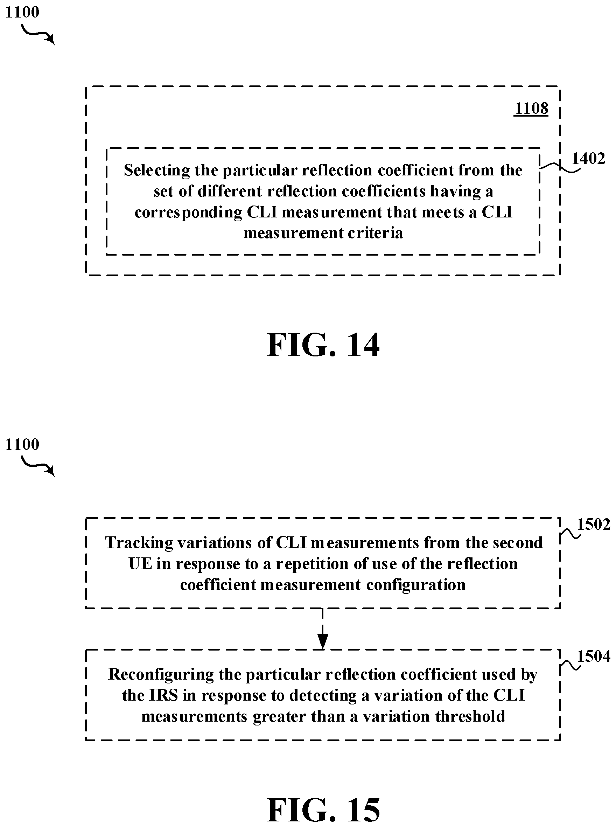

Referring to FIG. 14, in an optional or additional aspect that may be combined with any other aspect, at block 1402, the identifying, at block 1108 of the method 1100, of the particular reflection coefficient from the set of different reflection coefficients associated with the reflection coefficient measurement configuration based on the CLI measurement information comprises selecting the particular reflection coefficient from the set of different reflection coefficients having a corresponding CLI measurement that meets a CLI measurement criteria. For example, in an aspect, the base station 102, the TX CLI management component 188, and/or the selecting component 1035 may be configured to or may comprise means for selecting the particular reflection coefficient from the set of different reflection coefficients having a corresponding CLI measurement that meets a CLI measurement criteria.

For example, the selecting at block 1402 may include selecting a reflection coefficient from the set of different reflection coefficients have a corresponding CLI measurement that is the lowest CLI measurement (e.g., minimum). That is, the CLI measurement criteria may comprise selecting a lowest (e.g., minimum) CLI measurement. Alternatively or additionally, the CLI measurement criteria may comprise selecting an average CLI measurement. In other aspects, the CLI measurement criteria may comprise selecting a reflection coefficient that minimizes CLI measurements for multiple UEs.

Further, for example, the selecting at block 1402 may be performed to identify a particular reflection coefficient for configuring the IRS 510 that may mitigate the effects of CLI on the second UE 104B from the first UE 104A.

Referring to FIG. 15, in an optional or additional aspect that may be combined with any other aspect, the method 1100 may further include tracking variations of CLI measurements from the second UE in response to a repetition of use of the reflection coefficient measurement configuration. For example, in an aspect, the base station 102, the TX CLI management component 188, and/or the tracking component 1040 may be configured to or may comprise means for tracking variations of CLI measurements from the second UE 104B in response to a repetition of use of the reflection coefficient measurement configuration.

For example, the tracking at block 1502 may include repeating the network information exchange procedure to obtain updated CLI measurements corresponding to the second UE 104B. In some aspects, the tracking at block 1502 may include identifying a new reflection coefficient for configuring the IRS 510.

Further, for example, the tracking at block 1502 may be performed to respond to dynamic variations in the CLI measurements that may affect the effectiveness of the CLI mitigation by the IRS 510.

In this optional or additional aspect, at block 1504, the method 1100 may further include reconfiguring the particular reflection coefficient used by the IRS in response to detecting a variation of the CLI measurements greater than a variation threshold. For example, in an aspect, the base station 102, the TX CLI management component 188, and/or the reconfiguring component 1045 may be configured to or may comprise means for reconfiguring the particular reflection coefficient used by the IRS 510 in response to detecting a variation of the CLI measurements greater than a variation threshold.

For example, the reconfiguring at block 1504 may include reconfiguring the IRS 510 with the reflection coefficient identified at block 1502.

Further, for example, the reconfiguring at block 1504 may be performed to respond to dynamic variations in the CLI measurements that may affect the effectiveness of the CLI mitigation by the IRS 510.

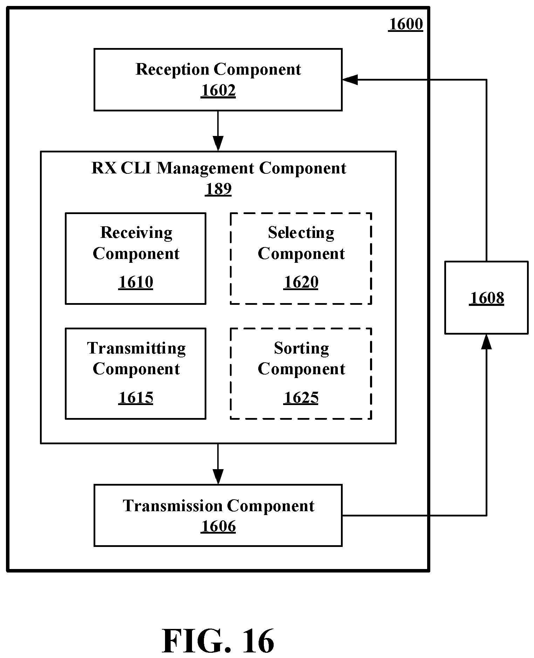

FIG. 16 is a block diagram of an example apparatus 1600 for wireless communication. The apparatus 1600 may be a base station 102 (e.g., base station 102 of FIGS. 1 and 3-9) or a base station 102 may include the apparatus 1600. In some aspects, the apparatus 1600 may include a reception component 1602 configured to receive wireless communications from another apparatus (e.g., apparatus 1608), a RX CLI management component 189 configured to manage CLI using IRSs, a transmission component 1606 configured to transmit wireless communications to another apparatus (e.g., apparatus 1608), and which may be in communication with one another (e.g., via one or more buses or electrical connections). As shown, the apparatus 1600 may be in communication with another apparatus 1608 (such as a base station 102, or another wireless communication device) using the reception component 1602 and the transmission component 1606.

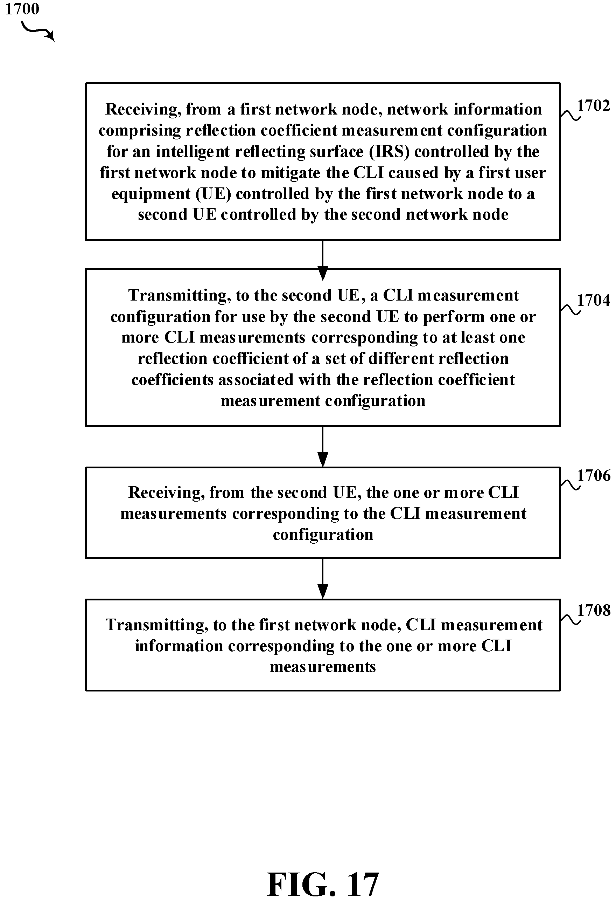

In some aspects, the apparatus 1600 may be configured to perform one or more operations described herein in connection with FIGS. 1 and 3-9. Alternatively or additionally, the apparatus 1600 may be configured to perform one or more processes described herein, such as method 1700 of FIGS. 17-21. In some aspects, the apparatus 1600 may include one or more components of the base station 102 described above in connection with FIGS. 1 and 3-9.

The reception component 1602 may receive communications, such as reference signals, control information, data communications, or a combination thereof, from the apparatus 1608. The reception component 1602 may provide received communications to one or more other components of the apparatus 1600, such as the RX CLI management component 189. In some aspects, the reception component 1602 may perform signal processing on the received communications (such as filtering, amplification, demodulation, analog-to-digital conversion, demultiplexing, de-interleaving, de-mapping, equalization, interference cancellation, or decoding, among other examples), and may provide the processed signals to the one or more other components. In some aspects, the reception component 1602 may include one or more antennas, a demodulator, a MIMO detector, a receive processor, a controller/processor, a memory, or a combination thereof, of the base station 102 described above in connection with FIGS. 1 and 3-9.

The transmission component 1606 may transmit communications, such as reference signals, control information, data communications, or a combination thereof, to the apparatus 1608. In some aspects, the RX CLI management component 189 may generate communications and may transmit the generated communications to the transmission component 1606 for transmission to the apparatus 1608. In some aspects, the transmission component 1606 may perform signal processing on the generated communications (such as filtering, amplification, modulation, digital-to-analog conversion, multiplexing, interleaving, mapping, or encoding, among other examples), and may transmit the processed signals to the apparatus 1608. In other aspects, the transmission component 1606 may include one or more antennas, a modulator, a transmit MIMO processor, a transmit processor, a controller/processor, a memory, or a combination thereof, of the base station 102 described above in connection with FIGS. 1 and 3-9. In some aspects, the transmission component 1606 may be co-located with the reception component 1602 in a transceiver or transceiver component.

The RX CLI management component 189 may be configured to manage CLI using IRSs. In some aspects, the RX CLI management component 189 may include a set of components, such as a receiving component 1610 configured to receive network information and CLI measurements, and a transmitting component 1615 configured to transmit CLI measurement configurations and CLI measurement information.

Alternatively or additionally, the RX CLI management component 189 may further include a selecting component 1620 configured to select particular reflection coefficients from sets of different reflection coefficients, and a sorting component 1625 configured to sort the sets of different reflection coefficients.

In other optional or additional aspects, the set of components may be separate and distinct from the RX CLI management component 189. In other aspects, one or more components of the set of components may include or may be implemented within a controller/processor (e.g., the TX processor 316, the RX processor 313, the controller/processor 315), a memory (e.g., the memory 317), or a combination thereof, of the base station 102 described in FIGS. 1 and 3-9. Alternatively or additionally, one or more components of the set of components may be implemented at least in part as software stored in a memory, such as the memory 317. For example, a component (or a portion of a component) may be implemented as computer-executable instructions or code stored in a computer-readable medium (e.g., a non-transitory computer-readable medium) and executable by a controller or a processor to perform the functions or operations of the component.

The number and arrangement of components shown in FIG. 16 are provided as an example. In practice, there may be additional components, fewer components, different components, or differently arranged components than those shown in FIG. 16. Furthermore, two or more components shown in FIG. 16 may be implemented within a single component, or a single component shown in FIG. 16 may be implemented as multiple, distributed components. Additionally or alternatively, a set of (one or more) components shown in FIG. 16 may perform one or more functions described as being performed by another set of components shown in FIGS. 1 and 3-9.

Referring to FIGS. 16-21, in operation, a base station 102 may perform a method 1700 of managing CLI using IRSs. The method 1700 may be performed by the base station 102 (which may include the memory 317 and which may be the entire base station 102 and/or one or more components of the base station 102 such as the RX CLI management component 189, the TX processor 316, the RX processor 313, and/or the controller/processor 315). The method 1700 may be performed by the RX CLI management component 189 in communication with the another base station 102 (e.g., TX CLI management component 188).

At block 1702 of FIG. 17, the method 1700 includes receiving, from a first network node, network information comprising reflection coefficient measurement configuration for an intelligent reflecting surface (IRS) controlled by the first network node to mitigate the CLI caused by a first user equipment (UE) controlled by the first network node to a second UE controlled by the second network node. For example, in an aspect, the base station 102, the RX CLI management component 189, and/or the receiving component 1610 may be configured to or may comprise means for receiving, from a first network node 102A, network information comprising reflection coefficient measurement configuration for an IRS 510 controlled by the first network node 102A to mitigate the CLI caused by a first UE 104A controlled by the first network node 102A to a second UE 104B controlled by the second network node 102B.

For example, the receiving at block 1702 may include generating a CLI measurement configuration for use by the second UE 104B to perform one or more CLI measurements corresponding to at least one reflection coefficient of a set of different reflection coefficients associated with the reflection coefficient measurement configuration.

In other optional or additional aspects, the receiving at block 1702 may include the reflection coefficient measurement configuration comprising at least one of a time-domain pattern of the set of different reflection coefficients or an indication of the set of different reflection coefficients.

In other optional or additional aspects, the receiving at block 1702 may include the reflection coefficient measurement configuration identifying a time-domain pattern of the set of different reflection coefficients and comprising at least one of a time duration of use by the IRS 510 of each of the set of different reflection coefficients, a starting time of use of a first one of the set of different reflection coefficients, a number of reflection coefficients in the set of different reflection coefficients, an indication of a value corresponding to each reflection coefficient of the set of different reflection coefficients, or a time-domain pattern indicator that identifies the time-domain pattern.

In other optional or additional aspects, the receiving at block 1702 may include the reflection coefficient measurement configuration configuring the second UE 104B to perform CLI measurement filtering separately for each reflection coefficient in the set of different reflection coefficients indicated by the reflection coefficient measurement configuration.

Further, for example, the receiving at block 1702 may be performed to configure the second UE 104B to perform CLI measurements corresponding to the reflection coefficients indicated by the network information. The CLI measurements may be used to identify a reflection coefficient that may mitigate the effects of CLI on the second UE 104B from the first UE 104A.

At block 1704 of FIG. 17, the method 1700 includes transmitting, to the second UE, a CLI measurement configuration for use by the second UE to perform one or more CLI measurements corresponding to at least one reflection coefficient of a set of different reflection coefficients associated with the reflection coefficient measurement configuration. For example, in an aspect, the base station 102, the RX CLI management component 189, and/or the transmitting component 1615 may be configured to or may comprise means for transmitting, to the second UE 104B, a CLI measurement configuration for use by the second UE 104B to perform one or more CLI measurements corresponding to at least one reflection coefficient of a set of different reflection coefficients associated with the reflection coefficient measurement configuration.

For example, the transmitting at block 1704 may include transmitting the CLI measurement configuration generated at block 1702 to the second UE 104B to configure the second UE 104B to perform the one or more CLI measurements as described above in reference to FIGS. 7 and 8.

Further, for example, the transmitting at block 1704 may be performed to configure the second UE 104B to perform CLI measurements corresponding to the reflection coefficients indicated by the network information. The CLI measurements may be used to identify a reflection coefficient that may mitigate the effects of CLI on the second UE 104B from the first UE 104A.

At block 1706 of FIG. 17, the method 1700 includes receiving, from the second UE, the one or more CLI measurements corresponding to the CLI measurement configuration. For example, in an aspect, the base station 102, the RX CLI management component 189, and/or the receiving component 1610 may be configured to or may comprise means for receiving, from the second UE, the one or more CLI measurements corresponding to the CLI measurement configuration.

For example, the receiving at block 1706 may include receiving one or more CLI measurement reports from the second UE 104B in response to having configured the second UE 104B to perform one or more CLI measurements according to the reflection coefficients indicated by the network information. The CLI measurement reports may indicate a CLI strength corresponding to each reflection coefficient.

Further, for example, the receiving at block 1706 may be performed to obtain the CLI measurement information that may be used to identify a reflection coefficient that may mitigate the effects of CLI on the second UE 104B from the first UE 104A.

At block 1708 of FIG. 17, the method 1700 includes transmitting, to the first network node, CLI measurement information corresponding to the one or more CLI measurements. For example, in an aspect, the base station 102, the RX CLI management component 189, and/or the transmitting component 1615 may be configured to or may comprise means for transmitting, to the first network node 102A, CLI measurement information corresponding to the one or more CLI measurements.

For example, the transmitting at block 1708 may include processing the one or more CLI measurement reports received from the second UE 104B, as described above in reference to FIGS. 7-9.

Further, for example, the transmitting at block 1708 may be performed to enable the first network node 102A to identify a particular reflection coefficient that may mitigate the effects of CLI on the second UE 104B from the first UE 104A. Thus, aspects presented herein provide for exchanging network information between network nodes (e.g., base stations 102A-B) to manage CLI with IRSs (e.g., IRS 510). Further, aspects presented herein may reduce interference and increase resource efficiency, when compared to a conventional communication system.

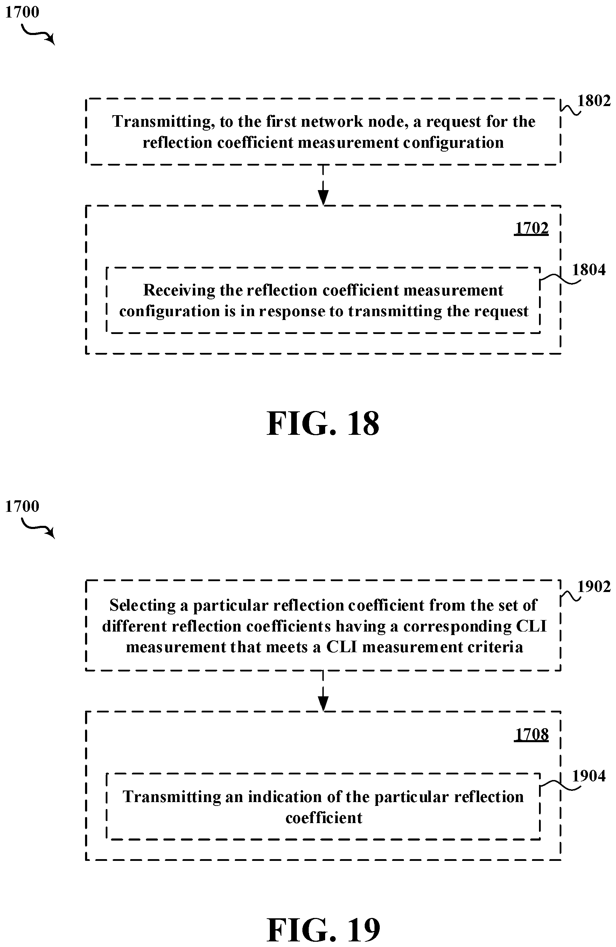

Referring to FIG. 18, in an optional or additional aspect that may be combined with any other aspect, at block 1802, the method 1700 may further include transmitting, to the first network node, a request for the reflection coefficient measurement configuration. For example, in an aspect, the base station 102, the RX CLI management component 189, and/or the transmitting component 1615 may be configured to or may comprise means for transmitting, to the first network node 102A, a request for the reflection coefficient measurement configuration.

For example, the transmitting at block 1802 may include determining to initiate a network information exchange to manage CLI with an IRS. In some aspects, the transmitting at block 1802 may include determining that a performance degradation of the second UE 104B may be caused by CLI. Alternatively or additionally, the transmitting at block 1802 may include determining that the second UE 104B may located at a location nearby (e.g., proximate) to the IRS 510.

In other optional or additional aspects, the transmitting at block 1802 may include generating a requested reflection coefficient measurement configuration for use in the network information exchange.

Further, for example, the transmitting at block 1802 may be performed to request to the first network node 102A to initiate a network information exchange to manage CLI with an IRS.

In this optional or additional aspect, at block 1804, the receiving, at block 1702 of the method 1700, from the first network node 102A, of the network information comprising the reflection coefficient measurement configuration for the IRS 510 controlled by the first network node 102A to mitigate the CLI caused by the first UE 104A controlled by the first network node 102A to the second UE 104B controlled by the second network node 102B comprises receiving the reflection coefficient measurement configuration in response to transmitting the request. For example, in an aspect, the base station 102, the RX CLI management component 189, and/or the receiving component 1610 may be configured to or may comprise means for receiving the reflection coefficient measurement configuration in response to transmitting the request.

For example, the receiving at block 1804 may include receiving, in response to transmitting the request, a reflection coefficient measurement configuration based on the requested reflection coefficient measurement configuration comprised by the request.

In some aspects, the receiving at block 1804 may include generating a CLI measurement configuration based on the requested reflection coefficient measurement configuration.

Further, for example, the receiving at block 1804 may be performed to proceed with the network information exchange initiated by the second network node 102B at block 1802.

Referring to FIG. 19, in an optional or additional aspect that may be combined with any other aspect, at block 1902, the method 1700 may further include selecting a particular reflection coefficient from the set of different reflection coefficients having a corresponding CLI measurement that meets a CLI measurement criteria. For example, in an aspect, the base station 102, the RX CLI management component 189, and/or the selecting component 1620 may be configured to or may comprise means for selecting a particular reflection coefficient from the set of different reflection coefficients having a corresponding CLI measurement that meets a CLI measurement criteria.

For example, the selecting at block 1902 may include selecting a reflection coefficient from the set of different reflection coefficients have a corresponding CLI measurement that is the lowest CLI measurement (e.g., minimum). That is, the CLI measurement criteria may comprise selecting a lowest (e.g., minimum) CLI measurement. Alternatively or additionally, the CLI measurement criteria may comprise selecting an average CLI measurement. In other aspects, the CLI measurement criteria may comprise selecting a reflection coefficient that minimizes CLI measurements for multiple UEs.

Further, for example, the selecting at block 1902 may be performed to identify a particular reflection coefficient for configuring the IRS 510 that may mitigate the effects of CLI on the second UE 104B from the first UE 104A.

In this optional or additional aspect, at block 1904, the transmitting, at block 1708 of the method 1700, to the first network node, of the CLI measurement information corresponding to the one or more CLI measurements comprises transmitting an indication of the particular reflection coefficient. For example, in an aspect, the base station 102, the RX CLI management component 189, and/or the transmitting component 1615 may be configured to or may comprise means for transmitting an indication of the particular reflection coefficient.

For example, the transmitting at block 1904 may include transmitting a CLI measurement information comprising the indication of the particular reflection coefficient selected at block 1902.

Further, for example, the transmitting at block 1904 may be performed to identify a particular reflection coefficient for configuring the IRS 510 that may mitigate the effects of CLI on the second UE 104B from the first UE 104A.

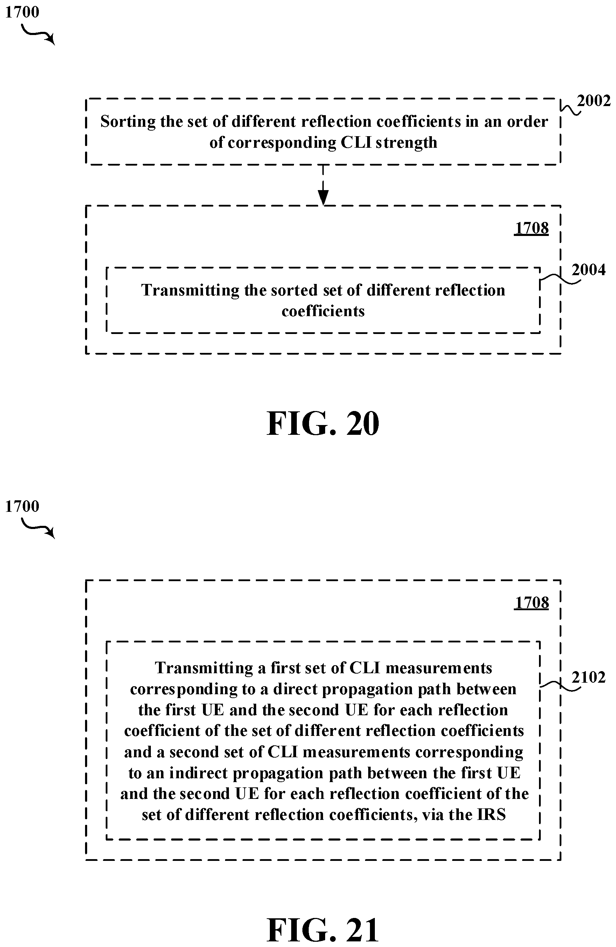

Referring to FIG. 20, in an optional or additional aspect that may be combined with any other aspect, at block 2002, the method 1700 may further include sorting the set of different reflection coefficients in an order of corresponding CLI strength. For example, in an aspect, the base station 102, the RX CLI management component 189, and/or the sorting component 1625 may be configured to or may comprise means for sorting the set of different reflection coefficients in an order of corresponding CLI strength.

For example, the sorting at block 2002 may include sorting the set of different reflection coefficients in an ascending or a descending order according to a corresponding CLI strength.

Further, for example, the sorting at block 2002 may be performed to identify a particular reflection coefficient for configuring the IRS 510 that may mitigate the effects of CLI on the second UE 104B from the first UE 104A.

In this optional or additional aspect, at block 2004, the transmitting, at block 1708 of the method 1700, to the first network node, of the CLI measurement information corresponding to the one or more CLI measurements comprises transmitting the sorted set of different reflection coefficients. For example, in an aspect, the base station 102, the RX CLI management component 189, and/or the transmitting component 1615 may be configured to or may comprise means for transmitting the sorted set of different reflection coefficients.

For example, the transmitting at block 2004 may include transmitting a CLI measurement information comprising the set of sorted different reflection coefficients created at block 2002.

Further, for example, the transmitting at block 2004 may be performed to identify a particular reflection coefficient for configuring the IRS 510 that may mitigate the effects of CLI on the second UE 104B from the first UE 104A.

Referring to FIG. 21, in an optional or additional aspect that may be combined with any other aspect, at block 2102, the transmitting, at block 1708 of the method 1700, to the first network node, of the CLI measurement information corresponding to the one or more CLI measurements comprises transmitting a first set of CLI measurements corresponding to a direct propagation path between the first UE and the second UE for each reflection coefficient of the set of different reflection coefficients and a second set of CLI measurements corresponding to an indirect propagation path between the first UE and the second UE for each reflection coefficient of the set of different reflection coefficients, via the IRS. For example, in an aspect, the base station 102, the RX CLI management component 189, and/or the transmitting component 1615 may be configured to or may comprise means for transmitting a first set of CLI measurements corresponding to a direct propagation path between the first UE 104A and the second UE 104B for each reflection coefficient of the set of different reflection coefficients and a second set of CLI measurements corresponding to an indirect propagation path between the first UE 104A and the second UE 104B for each reflection coefficient of the set of different reflection coefficients, via the IRS 510.

For example, the transmitting at block 2102 may include configuring the second UE 104B to perform the first set of CLI measurements corresponding to the direct propagation path between the first UE 104A and the second UE 104B. Alternatively or additionally, the transmitting at block 2102 may include configuring the second UE 104B to perform the second set of CLI measurements corresponding to the indirect propagation path between the first UE 104A and the second UE 104B.

Further, for example, the transmitting at block 2102 may be performed to identify a particular reflection coefficient for configuring the IRS 510 that may mitigate the effects of CLI on the second UE 104B from the first UE 104A.

It is understood that the specific order or hierarchy of blocks in the processes/flowcharts disclosed is an illustration of example approaches. Based upon design preferences, it is understood that the specific order or hierarchy of blocks in the processes/flowcharts may be rearranged. Further, some blocks may be combined or omitted. The accompanying method claims present elements of the various blocks in a sample order, and are not meant to be limited to the specific order or hierarchy presented.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. A method of managing cross-link interference, CLI, by a first network node of a wireless communication network, comprising:
generating (1102) a reflection coefficient measurement configuration for an intelligent reflecting surface, IRS, controlled by the first network node to mitigate the CLI caused by a first user equipment, UE, controlled by the first network node to a second UE controlled by a second network node;
transmitting (1104), to the second network node and to the IRS, network information comprising the reflection coefficient measurement configuration;
receiving (1106), from the second network node in response to transmitting the network information, CLI measurement information associated with the second UE and corresponding to the reflection coefficient measurement configuration;
identifying (1108) a particular reflection coefficient from a set of different reflection coefficients associated with the reflection coefficient measurement configuration based on the CLI measurement information; and
configuring (1110) the IRS with the particular reflection coefficient.

2. The method of claim 1, wherein the reflection coefficient measurement configuration comprises at least one of a time-domain pattern of the set of different reflection coefficients or an indication of the set of different reflection coefficients.

3. The method of claim 1, wherein the reflection coefficient measurement configuration identifies a time-domain pattern of the set of different reflection coefficients and comprises at least one of:
a time duration of use by the IRS of each of the set of different reflection coefficients;
a starting time of use of a first one of the set of different reflection coefficients;
a number of reflection coefficients in the set of different reflection coefficients;
an indication of a value corresponding to each reflection coefficient of the set of different reflection coefficients; or
a time-domain pattern indicator that identifies the time-domain pattern.

4. The method of claim 3, wherein at least one of the time duration or the starting time are indicated relative to a slot of a transmission frame, and wherein the time-domain pattern further includes a subcarrier spacing.

5. The method of claim 1, wherein the reflection coefficient measurement configuration comprises each reflection coefficient of the set of different reflection coefficients.

6. The method of claim 1, further comprising:
receiving, by the first network node from the second network node, a request for the reflection coefficient measurement configuration; and
wherein generating the reflection coefficient measurement configuration comprises generating, in response to receiving the request, the reflection coefficient measurement configuration.

7. The method of claim 6, wherein receiving the request for the reflection coefficient measurement configuration comprises receiving a requested reflection coefficient measurement configuration generated by the second network node.

8. The method of claim 1, wherein receiving the CLI measurement information comprises at least one of:
receiving an indication of the particular reflection coefficient having a lowest CLI measurement of CLI measurements by the second UE corresponding to each reflection coefficient of the set of different reflection coefficients associated with the reflection coefficient measurement configuration; or
receiving the set of different reflection coefficients sorted in an order of corresponding CLI strength; or
receiving CLI measurements corresponding to a direct propagation path between the first UE and the second UE for each reflection coefficient of the set of different reflection coefficients; or
receiving CLI measurements corresponding to an indirect propagation path between the first UE and the second UE for each reflection coefficient of the set of different reflection coefficients, via the IRS.

9. The method of claim 1, wherein identifying the particular reflection coefficient comprises:
selecting the particular reflection coefficient from the set of different reflection coefficients having a corresponding CLI measurement that meets a CLI measurement criteria.

10. The method of claim 1, further comprising:
tracking variations of CLI measurements from the second UE in response to a repetition of use of the reflection coefficient measurement configuration; and
reconfiguring the particular reflection coefficient used by the IRS in response to detecting a variation of the CLI measurements greater than a variation threshold.

11. An apparatus of managing cross-link interference, CLI, by a first network node of a wireless communication network, comprising:
a memory; and
a processor communicatively coupled with the memory and configured to:
generate a reflection coefficient measurement configuration for an intelligent reflecting surface, IRS, controlled by the first network node to mitigate the CLI caused by a first user equipment, UE, controlled by the first network node to a second UE controlled by a second network node;
transmit, to the second network node and to the IRS, network information comprising the reflection coefficient measurement configuration;
receive, from the second network node in response to transmitting the network information, CLI measurement information associated with the second UE and corresponding to the reflection coefficient measurement configuration;
identify a particular reflection coefficient from a set of different reflection coefficients associated with the reflection coefficient measurement configuration based on the CLI measurement information; and
configure the IRS with the particular reflection coefficient.

12. A method of managing cross-link interference, CLI, by a second network node of a wireless communication network, comprising:
receiving (1702), from a first network node, network information comprising reflection coefficient measurement configuration for an intelligent reflecting surface, IRS, controlled by the first network node to mitigate the CLI caused by a first user equipment, UE, controlled by the first network node to a second UE controlled by the second network node;
transmitting (1704), to the second UE, a CLI measurement configuration for use by the second UE to perform one or more CLI measurements corresponding to at least one reflection coefficient of a set of different reflection coefficients associated with the reflection coefficient measurement configuration;
receiving (1706), from the second UE, the one or more CLI measurements corresponding to the CLI measurement configuration; and
transmitting (1708), to the first network node, CLI measurement information corresponding to the one or more CLI measurements.

13. An apparatus of managing cross-link interference, CLI, by a second network node of a wireless communication network, comprising:
a memory; and
a processor communicatively coupled with the memory and configured to:
receive, from a first network node, network information comprising reflection coefficient measurement configuration for an intelligent reflecting surface, IRS, controlled by the first network node to mitigate the CLI caused by a first user equipment, UE, controlled by the first network node to a second UE controlled by the second network node;
transmit, to the second UE, a CLI measurement configuration for use by the second UE to perform one or more CLI measurements corresponding to at least one reflection coefficient of a set of different reflection coefficients associated with the reflection coefficient measurement configuration;
receive, from the second UE, the one or more CLI measurements corresponding to the CLI measurement configuration; and
transmit, to the first network node, CLI measurement information corresponding to the one or more CLI measurements.

## Patentansprüche

1. Ein Verfahren zum Verwalten einer Übersprechstörung (Cross-Link Interference bzw. CLI) durch einen ersten Netzknoten eines drahtlosen Kommunikationsnetzes, aufweisend:
Generieren (1102) einer Reflexionskoeffizient-Messkonfiguration für eine intelligente Reflexionsfläche (Intelligent Reflecting Surface bzw. IRS), die durch den ersten Netzknoten gesteuert wird, für ein Abschwächen der CLI, die durch ein erstes Benutzergerät (User Equipment bzw. UE), das durch den ersten Netzknoten gesteuert wird, für ein zweites UE, das durch einen zweiten Netzknoten gesteuert wird, verursacht wird,
Senden (1104), an den zweiten Netzknoten und an die IRS, von Netzinformationen, die die Reflexionskoeffizient-Messkonfiguration aufweisen,
Empfangen (1106), von dem zweiten Netzknoten in Antwort auf das Senden der Netzinformationen, von CLI-Messinformationen, die mit dem zweiten UE assoziiert sind und der Reflexionskoeffizient-Messkonfiguration entsprechen,
Identifizieren (1108) eines bestimmten Reflexionskoeffizienten aus einem Satz von verschiedenen Reflexionskoeffizienten, die mit der Reflexionskoeffizient-Messkonfiguration assoziiert sind, basierend auf den CLI-Messinformationen, und
Konfigurieren (1110) der IRS mit dem bestimmten Reflexionskoeffizienten.

2. Verfahren nach Anspruch 1, wobei die Reflexionskoeffizient-Messkonfiguration ein Zeitdomänen-Muster des Satzes von verschiedenen Reflexionskoeffizienten und/oder eine Angabe des Satzes von verschiedenen Reflexionskoeffizienten aufweist.

3. Verfahren nach Anspruch 1, wobei die Reflexionskoeffizient-Messkonfiguration ein Zeitdomänen-Muster des Satzes von verschiedenen Reflexionskoeffizienten identifiziert und wenigstens eines der Folgenden aufweist:
eine Zeitdauer der Verwendung durch die IRS jedes aus dem Satz von verschiedenen Reflexionskoeffizienten,
eine Startzeit der Verwendung eines ersten aus dem Satz von verschiedenen Reflexionskoeffizienten,
eine Anzahl von Reflexionskoeffizienten in dem Satz von verschiedenen Reflexionskoeffizienten,
eine Angabe eines Werts in Entsprechung zu jedem Reflexionskoeffizienten aus dem Satz von verschiedenen Reflexionskoeffizienten, oder
einen Zeitdomänen-Musterindikator, der das Zeitdomänen-Muster identifiziert.

4. Verfahren nach Anspruch 3, wobei die Zeitdauer und/oder die Startzeit relativ zu einem Schlitz eines Senderahmens angegeben werden und wobei das Zeitdomänen-Muster weiterhin einen Subträgerabstand enthält.

5. Verfahren nach Anspruch 1, wobei die Reflexionskoeffizient-Messkonfiguration jeden Reflexionskoeffizienten aus dem Satz von verschiedenen Reflexionskoeffizienten aufweist.

6. Verfahren nach Anspruch 1, das weiterhin aufweist:
Empfangen, durch den ersten Netzknoten von dem zweiten Netzknoten, einer Anfrage für die Reflexionskoeffizient-Messkonfiguration, und
wobei das Generieren der Reflexionskoeffizient-Messkonfiguration das Generieren, in Antwort auf das Empfangen der Anfrage, der Reflexionskoeffizient-Messkonfiguration aufweist.

7. Verfahren nach Anspruch 6, wobei das Empfangen der Anfrage für die Reflexionskoeffizient-Messkonfiguration das Empfangen einer angefragten Reflexionskoeffizient-Messkonfiguration, die durch den zweiten Netzknoten generiert wird, aufweist.

8. Verfahren nach Anspruch 1, wobei das Empfangen der CLI-Messinformationen wenigstens eines der Folgenden aufweist:
Empfangen einer Angabe des bestimmten Reflexionskoeffizienten mit einer niedrigsten CLI-Messung der CLI-Messungen durch das zweite UE in Entsprechung zu jedem Reflexionskoeffizienten aus dem Satz von verschiedenen Reflexionskoeffizienten, die mit der Reflexionskoeffizient-Messkonfiguration assoziiert sind, oder
Empfangen des Satzes von verschiedenen Reflexionskoeffizienten in der Reihenfolge der entsprechenden CLI-Stärke sortiert, oder
Empfangen von CLI-Messungen in Entsprechung zu einem direkten Ausbreitungspfad zwischen dem ersten UE und dem zweiten UE für jeden Reflexionskoeffizienten aus dem Satz von verschiedenen Reflexionskoeffizienten, oder
Empfangen von CLI-Messungen in Entsprechung zu einem indirekten Ausbreitungspfad zwischen dem ersten UE und dem zweiten UE für jeden Reflexionskoeffizienten aus dem Satz von verschiedenen Reflexionskoeffizienten über die IRS.

9. Verfahren nach Anspruch 1, wobei das Identifizieren des bestimmten Reflexionskoeffizienten aufweist:
Auswählen des bestimmten Reflexionskoeffizienten aus dem Satz von verschiedenen Reflexionskoeffizienten, der eine entsprechende CLI-Messung, die ein CLI-Messkriterium erfüllt, aufweist.

10. Verfahren nach Anspruch 1, das weiterhin aufweist:
Verfolgen von Variationen von CLI-Messungen von dem zweiten UE in Antwort auf eine Wiederholung der Verwendung der Reflexionskoeffizient-Messkonfiguration, und
Umkonfigurieren des bestimmten Reflexionskoeffizienten, der durch die IRS verwendet wird, in Antwort auf das Erfassen einer Variation der CLI-Messungen, die größer als ein Variationsschwellenwert ist.

11. Eine Vorrichtung zum Verwalten einer Übersprechstörung (Cross-Link Interference bzw. CLI) durch einen ersten Netzknoten eines drahtlosen Kommunikationsnetzes, aufweisend:
einen Speicher, und
einen Prozessor, der kommunikativ mit dem Speicher gekoppelt ist und konfiguriert ist zum:
Generieren einer Reflexionskoeffizient-Messkonfiguration für eine intelligente Reflexionsfläche (Intelligent Reflecting Surface bzw. IRS), die durch den ersten Netzknoten gesteuert wird, für ein Abschwächen der CLI, die durch ein erstes Benutzergerät (User Equipment bzw. UE), das durch den ersten Netzknoten gesteuert wird, für ein zweites UE, das durch einen zweiten Netzknoten gesteuert wird, verursacht wird,
Senden, an den zweiten Netzknoten und an die IRS, von Netzinformationen, die die Reflexionskoeffizient-Messkonfiguration aufweisen,
Empfangen, von dem zweiten Netzknoten in Antwort auf das Senden der Netzinformationen, von CLI-Messinformationen, die mit dem zweiten UE assoziiert sind und der Reflexionskoeffizient-Messkonfiguration entsprechen,
Identifizieren eines bestimmten Reflexionskoeffizienten aus einem Satz von verschiedenen Reflexionskoeffizienten, die mit der Reflexionskoeffizient-Messkonfiguration assoziiert sind, basierend auf den CLI-Messinformationen, und
Konfigurieren der IRS mit dem bestimmten Reflexionskoeffizienten.

12. Ein Verfahren zum Verwalten einer Übersprechstörung (Cross-Link Interference bzw. CLI) durch einen zweiten Netzknoten eines drahtlosen Kommunikationsnetzes, aufweisend:
Empfangen (1702), von einem ersten Netzknoten, von Netzinformationen, die eine Reflexionskoeffizient-Messkonfiguration für eine intelligente Reflexionsfläche (Intelligent Reflecting Surface bzw. IRS), die durch den ersten Netzknoten gesteuert wird, für ein Abschwächen der CLI, die durch ein erstes Benutzergerät (User Equipment bzw. UE), das durch den ersten Netzknoten gesteuert wird, für ein zweites UE, das durch den zweiten Netzknoten gesteuert wird, verursacht wird, aufweisen,
Senden (1704), an das zweite UE, einer CLI-Messkonfiguration für die Verwendung durch das zweite UE für das Durchführen einer oder mehrerer CLI-Messungen in Entsprechung zu wenigstens einem Reflexionskoeffizienten aus einem Satz von verschiedenen Reflexionskoeffizienten, die mit der Reflexionskoeffizient-Messkonfiguration assoziiert sind,
Empfangen (1706), von dem zweiten UE, der einen oder der mehreren CLI-Messungen in Entsprechung zu der CLI-Messkonfiguration, und
Senden (1708), an den ersten Netzknoten, von CLI-Messinformationen in Entsprechung zu der einen oder den mehreren CLI-Messungen.

13. Eine Vorrichtung zum Verwalten einer Übersprechstörung (Cross-Link Interference bzw. CLI) durch einen zweiten Netzknoten eines drahtlosen Kommunikationsnetzes, aufweisend:
einen Speicher, und
einen Prozessor, der kommunikativ mit dem Speicher gekoppelt ist und konfiguriert ist zum:
Empfangen, von einem ersten Netzknoten, von Netzinformationen, die eine Reflexionskoeffizient-Messkonfiguration für eine intelligente Reflexionsfläche (Intelligent Reflecting Surface bzw. IRS), die durch den ersten Netzknoten gesteuert wird, für ein Abschwächen der CLI, die durch ein erstes Benutzergerät (User Equipment bzw. UE), das durch den ersten Netzknoten gesteuert wird, für ein zweites UE, das durch den zweiten Netzknoten gesteuert wird, verursacht wird, aufweisen,
Senden, an das zweite UE, einer CLI-Messkonfiguration für die Verwendung durch das zweite UE für das Durchführen einer oder mehrerer CLI-Messungen in Entsprechung zu wenigstens einem Reflexionskoeffizienten aus einem Satz von verschiedenen Reflexionskoeffizienten, die mit der Reflexionskoeffizient-Messkonfiguration assoziiert sind,
Empfangen, von dem zweiten UE, der einen oder der mehreren CLI-Messungen in Entsprechung zu der CLI-Messkonfiguration, und
Senden, an den ersten Netzknoten, von CLI-Messinformationen in Entsprechung zu der einen oder den mehreren CLI-Messungen.

## Revendications

1. Procédé de gestion des interférences de liaison croisée, CLI, par un premier nœud de réseau d'un réseau de communication sans fil, comprenant les étapes consistant à :
générer (1102) une configuration de mesure de coefficient de réflexion pour une surface réfléchissante intelligente, IRS, commandée par le premier nœud de réseau pour atténuer les CLI causées par un premier équipement d'utilisateur, UE, commandé par le premier nœud de réseau à un second UE commandé par un second nœud de réseau ;
transmettre (1104), au deuxième nœud de réseau et à l'IRS, des informations de réseau comprenant la configuration de mesure du coefficient de réflexion ;
recevoir (1106), à partir du deuxième nœud de réseau en réponse à la transmission des informations de réseau, des informations de mesure des CLI associées au deuxième UE et correspondant à la configuration de mesure de coefficient de réflexion ;
identifier (1108) un coefficient de réflexion particulier à partir d'un ensemble de coefficients de réflexion différents associés à la configuration de mesure de coefficient de réflexion sur la base des informations de mesure des CLI ; et
configurer (1110) l'IRS avec le coefficient de réflexion particulier.

2. Le procédé de la revendication 1, dans lequel la configuration de mesure du coefficient de réflexion comprend au moins un parmi un motif dans le domaine temporel de l'ensemble de coefficients de réflexion différents ou une indication de l'ensemble de coefficients de réflexion différents.

3. Le procédé de la revendication 1, dans lequel la configuration de mesure du coefficient de réflexion identifie un motif dans le domaine temporel de l'ensemble de coefficients de réflexion différents et comprend au moins l'un des éléments suivants :
une durée d'utilisation par l'IRS de chacun de l'ensemble des différents coefficients de réflexion ;
une heure de début d'utilisation d'un premier de l'ensemble de coefficients de réflexion différents ;
un nombre de coefficients de réflexion dans l'ensemble de coefficients de réflexion différents ;
une indication d'une valeur correspondant à chaque coefficient de réflexion de l'ensemble de coefficients de réflexion différents ; ou
un indicateur de motif dans le domaine temporel qui identifie le motif dans le domaine temporel.

4. Le procédé de la revendication 3, dans lequel au moins une de la durée ou de l'heure de début est indiquée par rapport à un créneau d'une trame de transmission, et dans lequel le motif dans le domaine temporel comprend en outre un espacement de sous-porteuse.

5. Le procédé de la revendication 1, dans lequel la configuration de mesure du coefficient de réflexion comprend chaque coefficient de réflexion de l'ensemble des différents coefficients de réflexion.

6. Le procédé selon la revendication 1, comprenant en outre :
la réception, par le premier nœud de réseau à partir du deuxième nœud de réseau, d'une demande de configuration de mesure de coefficient de réflexion ; et
dans lequel la génération de la configuration de mesure de coefficient de réflexion comprend la génération, en réponse à la réception de la demande, de la configuration de mesure de coefficient de réflexion.

7. Le procédé de la revendication 6, dans lequel la réception de la demande de configuration de mesure de coefficient de réflexion comprend la réception d'une configuration de mesure de coefficient de réflexion demandée générée par le deuxième nœud de réseau.

8. Le procédé de la revendication 1, dans lequel la réception des informations de mesure des CLI comprend au moins l'un des éléments suivants :
la réception d'une indication du coefficient de réflexion particulier ayant une mesure des CLI la plus faible parmi les mesures des CLI par le deuxième UE correspondant à chaque coefficient de réflexion de l'ensemble de coefficients de réflexion différents associés à la configuration de mesure de coefficient de réflexion ; ou
la réception de l'ensemble de coefficients de réflexion différents triés dans un ordre d'intensité des CLI correspondante ; ou
la réception des mesures des CLI correspondant à un trajet de propagation direct entre le premier UE et le second UE pour chaque coefficient de réflexion de l'ensemble de coefficients de réflexion différents ; ou
la réception des mesures des CLI correspondant à un trajet de propagation indirecte entre le premier UE et le second UE pour chaque coefficient de réflexion de l'ensemble de coefficients de réflexion différents, via l'IRS.

9. Le procédé de la revendication 1, dans lequel l'identification du coefficient de réflexion particulier comprend les étapes consistant à :
sélectionner le coefficient de réflexion particulier parmi l'ensemble de coefficients de réflexion différents ayant une mesure des CLI correspondante qui satisfait à un critère de mesure des CLI.

10. Procédé selon la revendication 1, comprenant en outre les étapes consistant à :
suivre les variations des mesures des CLI à partir du second UE en réponse à une répétition d'utilisation de la configuration de mesure de coefficient de réflexion ; et
reconfigurer le coefficient de réflexion particulier utilisé par l'IRS en réponse à la détection d'une variation des mesures des CLI supérieure à un seuil de variation.

11. Un appareil de gestion d'interférence de liaison croisée, CLI, par un premier nœud de réseau d'un réseau de communication sans fil, comprenant :
une mémoire ; et
un processeur couplé en communication avec la mémoire et configuré pour :
générer une configuration de mesure de coefficient de réflexion pour une surface réfléchissante intelligente, IRS, commandée par le premier nœud de réseau pour atténuer les CLI causées par un premier équipement d'utilisateur, UE, commandé par le premier nœud de réseau à un second UE commandé par un second nœud de réseau ;
transmettre, au deuxième nœud de réseau et à l'IRS, des informations de réseau comprenant la configuration de mesure de coefficient de réflexion ;
recevoir, à partir du deuxième nœud de réseau en réponse à la transmission des informations de réseau, des informations de mesure CLI associées au deuxième UE et correspondant à la configuration de mesure de coefficient de réflexion ;
identifier un coefficient de réflexion particulier à partir d'un ensemble de coefficients de réflexion différents associés à la configuration de mesure du coefficient de réflexion sur la base des informations de mesure des CLI ; et
configurer l'IRS avec le coefficient de réflexion particulier.

12. Procédé de gestion des interférences de liaison croisée, CLI, par un deuxième nœud de réseau d'un réseau de communication sans fil, comprenant les étapes consistant à :
recevoir (1702), à partir d'un premier nœud de réseau, des informations de réseau comprenant une configuration de mesure de coefficient de réflexion pour une surface réfléchissante intelligente, IRS, commandée par le premier nœud de réseau pour atténuer des CLI causées par un premier équipement d'utilisateur, UE, commandé par le premier nœud de réseau à un second UE commandé par le second nœud de réseau ;
transmettre (1704), au second UE, une configuration de mesure des CLI destinée à être utilisée par le second UE pour effectuer une ou plusieurs mesures des CLI correspondant à au moins un coefficient de réflexion d'un ensemble de coefficients de réflexion différents associés à la configuration de mesure de coefficient de réflexion ;
recevoir (1706), à partir du second UE, la ou les mesures CLI correspondant à la configuration de mesure des CLI ; et
transmettre (1708), au premier nœud de réseau, des informations de mesure des CLI correspondant à la ou aux mesures des CLI.

13. Un appareil de gestion des interférences inter-liaisons, CLI, par un deuxième nœud de réseau d'un réseau de communication sans fil, comprenant :
une mémoire ; et
un processeur couplé en communication avec la mémoire et configuré pour :
recevoir, à partir d'un premier nœud de réseau, des informations de réseau comprenant une configuration de mesure de coefficient de réflexion pour une surface réfléchissante intelligente, IRS commandée par le premier nœud de réseau pour atténuer les CLI causées par un premier équipement d'utilisateur, UE, commandé par le premier nœud de réseau à un second UE commandé par le second nœud de réseau ;
transmettre, au deuxième UE, une configuration de mesure des CLI destinée à être utilisée par le deuxième UE pour effectuer une ou plusieurs mesures des CLI correspondant à au moins un coefficient de réflexion d'un ensemble de coefficients de réflexion différents associés à la configuration de mesure de coefficient de réflexion ;
recevoir, à partir du deuxième UE, la ou les mesures des CLI correspondant à la configuration de mesure des CLI ; et
transmettre, au premier nœud de réseau, des informations de mesure des CLI correspondant à la ou aux mesures des CLI.
